# EUROPÄISCHE PATENTSCHRIFT

(11) **EP 3 549 216 B1**
(45) Veröffentlichungstag und Bekanntmachung des Hinweises auf die Patenterteilung: **20.04.2022**
(21) Anmeldenummer: 17800747.2
(22) Anmeldetag: 03.11.2017
(51) Int. Cl.: H02G 3/04

(54) **AUFKLAPPBARER WELLSCHLAUCH UND KABELBAUM**
CORRUGATED TUBE THAT CAN BE FOLDED OPEN AND WIRING HARNESS
TUYAU ONDULÉ PLIANT ET FAISCEAU DE CÂBLES

(30) Priorität: 29.11.2016 DE 102016123040
(43) Veröffentlichungstag der Anmeldung: 09.10.2019
(73) Patentinhaber: Delfingen FR-Anteuil S.A., 25340 Anteuil (FR)
(72) Erfinder: CHU, Van Ngoc, 85586 Poing (DE)
(74) Vertreter: Horn Kleimann Waitzhofer Patentanwälte PartG mbB
(86) Internationale Anmeldenummer: PCT/EP2017/078228
(87) Internationale Veröffentlichungsnummer: WO 2018/099686

(56) Entgegenhaltungen:
- EP-A1- 2 182 599
- EP-A2- 0 826 559
- WO-A1-2015/053197
- WO-A1-2015/099128
- DE-A1-102014 108 757
- FR-A1- 2 935 555

## Beschreibung

Die vorliegende Erfindung betrifft einen aufklappbaren Wellschlauch und einen Kabelbaum mit einem derartigen aufklappbaren Wellschlauch.

Wellschläuche oder Wellrohre können insbesondere im Automobilbau als Schutzrohre für Kabel wie elektrische Leitungen eingesetzt werden. Hierbei werden die Kabel zur Montage in dem umfänglich geschlossenen Wellschlauch durch diesen hindurch gezogen oder geschoben. Um die Montage von Kabeln in derartigen Wellschläuchen zu erleichtern, können diese aufklappbar gestaltet werden.

Die EP 2 035 735 B2 beschreibt einen aufklappbaren Wellschlauch mit einer ersten Wellschlauchschale und einer zweiten Wellschlauchschale, die mit Hilfe eines Scharnierabschnitts verschwenkbar miteinander verbunden sind. Der Wellschlauch wird durch Extrudieren hergestellt, wobei nach dem Extrudieren aus einer der Wellschlauchschalen ein Segment herausgeschnitten wird.

Die EP 0 114 213 A2 zeigt ein Hüllwellrohr aus Kunststoff zur Elektroinstallation mit einem seitlichen Längsschlitz. Das Hüllwellrohr ist kontinuierlich in einem Arbeitsgang herstellbar und kann nach einem Umhüllen eines bereits verlegten Kabels in einem Arbeitsgang mit dem Verlegen weitgehend gas- und wasserdicht verschlossen werden. Dies wird dadurch erreicht, dass entlang eines Längsschlitzes eine zwei Schlitzränder des Hüllwellrohrs lösbar verbindende Rast- oder Schnappverschlusseinrichtung vorgesehen ist.

Die US 6,938,645 B2 beschreibt einen aufklappbaren Wellschlauch, der in seiner Längsrichtung geschlitzt ist und der einen Scharnierbereich aufweist, der aus einem flexiblen Material gefertigt ist. Der Wellschlauch weist ferner eine an einer Schnittkante desselben angeformte Lippe auf.

Die US 6,034,329 A zeigt einen aufklappbaren Wellschlauch, der in seiner Längsrichtung geschlitzt ist und der einen Scharnierbereich sowie eine dem Scharnierbereich gegenüberliegende Verriegelungseinrichtung umfasst. Mit Hilfe der Verriegelungseinrichtung können zwei einander gegenüberliegende Schnittränder des geschlitzten Wellschlauchs miteinander verbunden werden.

Die EP 2 182 599 A1 beschreibt ein Wellrohr aus Kunststoff mit über seine Länge verteilten, abwechselnd aufeinander folgenden, umlaufenden Wellenbergen und Wellentälern sowie mit einem entlang einer Mantellinie verlaufenden Schlitz, wobei die beidseits des Schlitzes liegenden Randbereiche des Wellrohres Formgebungen aufweisen, mittels derer bei einander überlappenden Randbereichen ein lösbarer Verschluss ausbildbar ist.

Die FR 2 935 555 A1 zeigt einen aufklappbaren Wellschlauch mit in seiner Längsrichtung abwechselnd angeordneten Wellentälern und Wellenbergen. Zum Schutz von in dem Wellschlauch aufgenommenen Kabeln vor Abrieb weist der Wellschlauch eine Schutzfolie auf, die zwischen den Kabeln und einer Innenwandung des Wellschlauchs angeordnet ist.

Die DE 10 2014 108 757 A1 beschreibt ein Wellrohr aus Kunststoff zum Ummanteln von Leitungen. Das Wellrohr umfasst über seine Länge verteilte Wellen sowie einen entlang einer Mantellängslinie verlaufenden Längsschlitz. Das Wellrohr ist zum Einlegen der Leitungen unter Freigabe des Längsschlitzes in eine geöffnete Stellung und ferner in eine Verschlussstellung überführbar, in der sich beidseits des Längsschlitzes liegende Randbereiche des Wellrohres überdecken, wobei das Wellrohr in Richtung auf seine Verschlussstellung hin elastisch vorgespannt ist.

Die EP 0 826 559 A2 zeigt einen aufklappbaren Wellschlauch mit zwei Schalen, die endseitig mit Hilfe eines Gelenkabschnitts miteinander verbunden sind. Die Schalen weisen dem Gelenkabschnitt abgewandt endseitige Eingriffsbereiche auf, die zum Verschließen des Wellschlauchs ineinandergreifen.

Die WO 2015/053197 A1 beschreibt ein Wellrohr mit abwechselnd angeordneten Wellenbergen und Wellentälern. Das Wellrohr weist eine Balgstruktur auf, die rohrförmig ohne Schlitze in Umfangsrichtung ausgebildet ist und die Stegteile und Rillenteile aufweist, die jeweils entlang der Umfangsrichtung an der Außenumfangsfläche ausgebildet sind und die abwechselnd in axialer Richtung nebeneinander angeordnet sind.

Die WO 2015/099128 A1 zeigt einen aufklappbaren Wellschlauch, dessen Wellschlauchschalen an einem Gelenkabschnitt verschwenkbar miteinander verbunden sind. Die Wellschlauchschalen können zum Schließen des Wellschlauchs übereinander greifen.

Vor diesem Hintergrund besteht eine Aufgabe der vorliegenden Erfindung darin, einen verbesserten Wellschlauch zur Verfügung zu stellen.

Demgemäß wird ein aufklappbarer Wellschlauch zum Aufnehmen von Kabeln vorgeschlagen. Der Wellschlauch umfasst eine erste Wellschlauchschale, die eine Vielzahl an um diese umlaufenden ersten Wellschlauchrippen aufweist, eine zweite Wellschlauchschale, die eine Vielzahl an um diese umlaufenden zweiten Wellschlauchrippen aufweist, einen Gelenkabschnitt, der die Wellschlauchrippen der beiden Wellschlauchschalen voneinander trennt und mit dessen Hilfe die beiden Wellschlauchschalen jeweils an einem ersten Endabschnitt derselben verschwenkbar miteinander verbunden sind, zumindest einen Lippenabschnitt, der an einem zweiten Endabschnitt der ersten Wellschlauchschale und/oder an einem zweiten Endabschnitt der zweiten Wellschlauchschale vorgesehen ist, wobei der zumindest eine Lippenabschnitt aus einem anderen Material als die Wellschlauchschalen gefertigt ist, und eine Verrasteinrichtung zum miteinander Verrasten der beiden Wellschlauchschalen bei einem Verbringen des Wellschlauchs von einem aufgeklappten Zustand, in dem die erste Wellschlauchschale außerhalb der zweiten Wellschlauchschale angeordnet ist, in einen zusammengeklappten Zustand desselben, in dem die erste Wellschlauchschale zumindest abschnittsweise innerhalb der zweiten Wellschlauchschale angeordnet ist, wobei die Verrasteinrichtung die Wellschlauchrippen umfasst, und wobei in dem zusammengeklappten Zustand des Wellschlauchs die zweiten Wellschlauchrippen sowohl in einer Radialrichtung als auch in einer Umfangsrichtung des Wellschlauchs die ersten Wellschlauchrippen formschlüssig umgreifen. Dabei sind die erste Wellschlauchschale und die zweite Wellschlauchschale bei einem Verbringen des Wellschlauchs von dem aufgeklappten Zustand in den zusammengeklappten Zustand oder umgekehrt um eine Drehachse relativ zueinander verschwenkbar, wobei die erste Wellschlauchschale und die zweite Wellschlauchschale um einen Verschwenkwinkel relativ zueinander verschwenkbar sind. Die Verrasteinrichtung umfasst erste Taschenabschnitte, die an den ersten Wellschlauchrippen angeformt sind, und zweite Taschenabschnitte, die an den zweiten Wellschlauchrippen angeformt sind, wobei in dem zusammengeklappten Zustand des Wellschlauchs die ersten Taschenabschnitte in den zweiten Taschenabschnitten aufgenommen sind. Jeder erste Taschenabschnitt umfasst eine Vorderwand und jeder zweite Taschenabschnitt umfasst ebenfalls eine Vorderwand, wobei in dem zusammengeklappten Zustand des Wellschlauchs die jeweilige Vorderwand der ersten Taschenabschnitte an der jeweiligen Vorderwand der zweiten Taschenabschnitte anliegt, so dass die Taschenabschnitte einander in der Umfangsrichtung formschlüssig umgreifen.

Dadurch, dass der zumindest eine Lippenabschnitt vorgesehen ist, kann eine Beschädigung der Kabel sowohl bei einem Einbringen derselben in den Wellschlauch als auch im Betrieb eines Kabelbaums mit einem derartigen Wellschlauch verhindert werden, da die Kabel nicht mit scharfen Kanten des Wellschlauchs in Berührung kommen. Dadurch, dass die Verriegelungseinrichtung die Wellschlauchschalen nicht nur in der Radialrichtung sondern auch in der Umfangsrichtung verriegelt, kann ein ungewolltes Öffnen des zusammengeklappten Wellschlauchs auch bei einer Führung desselben um enge Radien verhindert werden. Hierdurch kann eine hohe Betriebszuverlässigkeit erreicht werden.

Der Wellschlauch kann auch als Wellrohr bezeichnet werden. Der Gelenkabschnitt kann auch als Scharnierabschnitt bezeichnet werden. In dem zusammengeklappten Zustand des Wellschlauchs ragt der zumindest eine Lippenabschnitt in einen Innenraum des Wellschlauchs hinein, wodurch, wie schon zuvor erwähnt, eine Beschädigung der Kabel, beispielsweise bei Vibrationen, verhindert werden kann. Die Wellschlauchrippen enden bevorzugt vor dem zumindest einen Lippenabschnitt. Das heißt, der zumindest eine Lippenabschnitt ist frei von Wellschlauchrippen. Der zumindest eine Lippenabschnitt ist bevorzugt stirnseitig an den Wellschlauchrippen vorgesehen. Darunter, dass der Gelenkabschnitt die Wellschlauchrippen voneinander trennt, ist zu verstehen, dass die Wellschlauchrippen im Bereich des Gelenkabschnitts unterbrochen sind. Das heißt, der Gelenkabschnitt weist keine Wellschlauchrippen auf. der Gelenkabschnitt verläuft bevorzugt bandförmig entlang einer Längsrichtung des Wellschlauchs.

Vorzugsweise ist der zumindest eine Lippenabschnitt glatt. Darunter, dass der zumindest eine Lippenabschnitt glatt ist, ist zu verstehen, dass der zumindest eine Lippenabschnitt bevorzugt wellschlauchrippenfrei ist. Das heißt, die Wellschlauchrippen erstrecken sich bis zu dem Lippenabschnitt hin, jedoch nicht in diesen hinein. Somit ist der zumindest eine Lippenabschnitt als sich in der Längsrichtung des Wellschlauchs erstreckendes glattes Band ausgebildet. Der zumindest eine Lippenabschnitt erstreckt sich bevorzugt glatt in der Umfangsrichtung und glatt in der Längsrichtung und bildet so eine ebene oder leicht gekrümmte Fläche. Das heißt, der zumindest eine Lippenabschnitt weist bevorzugt weder in der Längsrichtung noch in der Umfangsrichtung verlaufende Rippen oder Wellungen auf.

In einer alternativen Weiterbildung des Wellschlauchs ist der zumindest eine Lippenabschnitt nicht glatt, sondern gewellt. Hierzu können an dem zumindest einen Lippenabschnitt Rippen vorgesehen sein, die in der Längsrichtung voneinander beabstandet angeordnet sind. Zwischen den Rippen sind bevorzugt Rippentäler vorgesehen. Die Rippen des zumindest einen Lippenabschnitts verlaufen bevorzugt senkrecht zu der Längsrichtung. Die Rippen des zumindest einen Lippenabschnitts weisen vorzugsweise einen kleineren Außendurchmesser auf als die entsprechenden Wellschlauchrippen. Bevorzugt sind die Rippen des zumindest einen Lippenabschnitts nicht identisch mit den Wellschlauchrippen. Das heißt, auch wenn der zumindest eine Lippenabschnitt gewellt ist, erstrecken sich die Wellschlauchrippen vorzugsweise bis zu dem Lippenabschnitt hin, jedoch nicht in diesen hinein. Die Rippen des zumindest einen Lippenabschnitts können stirnseitig an den entsprechenden Wellschlauchrippen vorgesehen sein. Der zumindest eine Lippenabschnitt kann weiterhin auch Rippen aufweisen, die in der Längsrichtung beziehungsweise parallel zu der Längsrichtung verlaufen.

Zwischen den jeweiligen Wellschlauchrippen sind insbesondere Rippentäler vorgesehen, so dass sich eine Wellschlauchrippe mit einem Rippental abwechselt. Somit ist zwischen zwei Wellschlauchrippen ein Rippental und umgekehrt zwischen zwei Rippentälern eine Wellschlauchrippe angeordnet. Die Wellschlauchrippen sind so in der Längsrichtung gleichmäßig voneinander beabstandet positioniert. Jede erste Wellschlauchrippe und jede zweite Wellschlauchrippe weist bevorzugt zwei voneinander beabstandet angeordnete Seitenwände auf, die scheibenförmig sind. Zwischen zwei Seitenwänden ist jeweils ein Rippenberg vorgesehen, der zusammen mit den zwei Seitenwänden eine Wellschlauchrippe bildet. Vorzugsweise ist ein Außendurchmesser der Wellenberge der ersten Wellschlauchschale geringfügig kleiner als oder gleich groß wie ein Innendurchmesser der Wellenberge der zweiten Wellschlauchschale. Insbesondere ist der Außendurchmesser der Wellenberge der ersten Wellschlauchschale 0,2 bis 1,5 mm kleiner als der Innendurchmesser der Wellenberge der zweiten Wellschlauchschale. Hierdurch wird erreicht, dass die erste Wellschlauchschale und/oder die zweite Wellschlauchschale in dem zusammengeklappten Zustand vorspannungsfrei oder zumindest nur gering vorgespannt sind. Dadurch wird bei einem Zusammenklappen des Wellschlauchs und/oder in dem zusammengeklappten Zustand eine übermäßige mechanische Belastung der Wellschlauchschalen verhindert. Hierdurch sind diese besonders langlebig und vor Beschädigungen geschützt. Bevorzugt sind die Wellschlauchschalen kreisbogenförmig gekrümmt. Die Radialrichtung ist bevorzugt von Symmetrieachsen der Wellschlauchschalen, die in dem zusammengeklappten Zustand bevorzugt koaxial zueinander positioniert sind, nach außen in Richtung der Wellschlauchschalen orientiert. Die Umfangsrichtung kann im Uhrzeigersinn oder entgegen dem Uhrzeigersinn orientiert sein. Die Umfangsrichtung ist in dem zusammengeklappten Zustand bevorzugt parallel zu den gekrümmten Wellschlauchschalen orientiert. Eine formschlüssige Verbindung entsteht durch das Ineinander- oder Hintergreifen von mindestens zwei Verbindungspartnern, hier den ersten Wellschlauchrippen und den zweiten Wellschlauchrippen.

Erfindungsgemäß ist der zumindest eine Lippenabschnitt aus einem anderen Material als die Wellschlauchschalen gefertigt. Bevorzugt ist an jeder Wellschlauchschale ein derartiger Lippenabschnitt vorgesehen. Die Lippenabschnitte sind insbesondere stoffschlüssig mit den Wellschlauchschalen verbunden. Das heißt insbesondere, dass die Wellschlauchschalen und die Lippenabschnitte ein Bauteil bilden. Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch Zerstörung der Verbindungsmittel und/oder der Verbindungspartner trennen lassen. Bevorzugt ist der Wellschlauch in einem Koextrusionsverfahren, insbesondere in einem Zweikomponenten-Koextrusionsverfahren, hergestellt. Die Wellschlauchrippen können mit Hilfe eines Korrugators angeformt sein. Der Wellschlauch wird so als Endlosprodukt hergestellt, das auf die gewünschte Länge abgelängt werden kann. Unmittelbar nach der Extrusion wird der Wellschlauch an dem zumindest einen Lippenabschnitt geschlitzt. Das heißt, zwischen die Lippenabschnitte wird ein Einschnitt oder Schlitz eingebracht, um diese voneinander zu trennen. Der Wellschlauch ist beliebig oft von dem aufgeklappten Zustand in den zusammengeklappten Zustand oder umgekehrt verbringbar. Hierdurch kann der Wellschlauch mehrfach verwendet werden.

Die Verrasteinrichtung umfasst erste Taschenabschnitte, die an den ersten Wellschlauchrippen angeformt sind, und zweite Taschenabschnitte, die an den zweiten Wellschlauchrippen angeformt sind, wobei in dem zusammengeklappten Zustand des Wellschlauchs die ersten Taschenabschnitte in den zweiten Taschenabschnitten aufgenommen sind.

Die ersten Taschenabschnitte sind bevorzugt Teil der ersten Wellschlauchrippen. Bevorzugt ist jeder ersten Wellschlauchrippe ein derartiger erster Taschenabschnitt zugeordnet. Die zweiten Taschenabschnitte sind Teil der zweiten Wellschlauchrippen. Bevorzugt ist jeder zweiten Wellschlauchrippe ein derartiger zweiter Taschenabschnitt zugeordnet. Die Taschenabschnitte können auch als Taschenverschlüsse, Aufnahmetaschen, Eingriffsabschnitte, taschenförmige Abschnitte, Aufnahmeabschnitte oder Aufnahmegeometrien bezeichnet werden. In dem zusammengeklappten Zustand greifen die ersten Taschenabschnitte insbesondere formschlüssig in die zweiten Taschenabschnitte ein. Mit Hilfe der taschenartigen Geometrie der Taschenabschnitte kann die Verriegelung der Wellschlauchschalen sowohl in der Radialrichtung als auch in der Umfangsrichtung erreicht werden.

Jeder erste Taschenabschnitt umfasst eine Vorderwand und jeder zweite Taschenabschnitt umfasst ebenfalls eine Vorderwand, wobei in dem zusammengeklappten Zustand des Wellschlauchs die jeweilige Vorderwand der ersten Taschenabschnitte an der jeweiligen Vorderwand der zweiten Taschenabschnitte anliegt, so dass die Taschenabschnitte einander in der Umfangsrichtung formschlüssig umgreifen.

Insbesondere liegt die Vorderwand jedes ersten Taschenabschnitts an der Vorderwand des korrespondierenden zweiten Taschenabschnitts an. Mit Hilfe der Verriegelung in der Umfangsrichtung kann zuverlässig verhindert werden, dass sich der Wellschlauch bei einem Verbiegen desselben ungewollt öffnet. Die Vorderwände verlaufen parallel oder zumindest annähernd parallel zu der Radialrichtung. An den Vorderwänden der zweiten Taschenabschnitte kann der Lippenabschnitt der zweiten Wellschlauchschale vorgesehen sein.

Gemäß einer weiteren Ausführungsform umfasst jeder erste Taschenabschnitt einen Rippenberg und jeder zweite Taschenabschnitt umfasst ebenfalls einen Rippenberg, wobei in dem zusammengeklappten Zustand des Wellschlauchs der jeweilige Rippenberg der ersten Taschenabschnitte an dem jeweiligen Rippenberg der zweiten Taschenabschnitte anliegt, so dass die Taschenabschnitte einander in der Radialrichtung formschlüssig umgreifen.

Die Taschenabschnitte sind bevorzugt Teil der Wellschlauchrippen. Jedem ersten Taschenabschnitt sind Seitenwände der jeweiligen ersten Wellschlauchrippe zugeordnet und jedem zweiten Taschenabschnitt sind Seitenwände der jeweiligen zweiten Wellschlauchrippe zugeordnet. Zwischen den Seitenwänden sind die Wellenberge angeordnet. Darunter, dass die Taschenabschnitte einander in der Radialrichtung formschlüssig umgreifen, ist zu verstehen, dass die Wellenberge der Taschenabschnitte aneinander anliegen und zu eine Bewegung in der Radialrichtung blockieren.

Gemäß einer weiteren Ausführungsform umfasst jeder erste Taschenabschnitt zwei in einer Längsrichtung des Wellschlauchs voneinander beabstandet angeordnete Seitenwände und jeder zweite Taschenabschnitt umfasst ebenfalls zwei in der Längsrichtung voneinander beabstandet angeordnete Seitenwände, wobei in dem zusammengeklappten Zustand des Wellschlauchs die jeweiligen Seitenwände der ersten Taschenabschnitte zwischen den jeweiligen Seitenwänden der zweiten Taschenabschnitte angeordnet sind, so dass die Taschenabschnitte einander in der Längsrichtung formschlüssig umgreifen.

Die Seitenwände sind gleichzeitig die Seitenwände der ersten Wellschlauchrippen oder der zweiten Wellschlauchrippen. Bei einem Verbringen des Wellschlauchs von dem aufgeklappten Zustand in den zusammengeklappten Zustand können die jeweiligen Seitenwände eines Taschenabschnitts so verformt werden, dass diese in der Längsrichtung voneinander weg oder aufeinander zu bewegt werden. Insbesondere werden die Seitenwände der zweiten Taschenabschnitte so verformt, dass diese voneinander weg bewegt werden und die Seitenwände der ersten Taschenabschnitte werden so verformt, dass diese aufeinander zu bewegt werden. Hierdurch kann eine Verklemmung der Taschenabschnitte miteinander erreicht werden. Dies erhöht die Betriebszuverlässigkeit des Wellschlauchs.

Gemäß einer weiteren Ausführungsform umfasst die Verrasteinrichtung eine in einer Längsrichtung des Wellschlauchs verlaufende Ausnehmung, die die ersten Wellschlauchrippen durchbricht, wobei die zweiten Taschenabschnitte in dem zusammengeklappten Zustand des Wellschlauchs in die Ausnehmung eingreifen.

Die Ausnehmung ist bevorzugt keilförmig oder dreiecksförmig. Vorzugsweise durchbricht die Ausnehmung die ersten Wellschlauchrippen in der Radialrichtung nicht bis auf die Rippentäler derselben. Hierdurch sind auch im Bereich der Ausnehmung die ersten Wellschlauchrippen noch teilweise vorhanden. Dies bewirkt eine Versteifung der ersten Wellschlauchschale im Bereich der Ausnehmung. Alternativ kann die Ausnehmung die ersten Wellschlauchrippen in der Radialrichtung auch bis auf die Rippentäler durchbrechen. Bevorzugt begrenzen die Vorderwände der ersten Taschenabschnitte die Ausnehmung an einer Seite derselben.

Gemäß einer weiteren Ausführungsform umfasst die erste Wellschlauchschale einen ersten Umfangswinkel und die zweite Wellschlauchschale umfasst einen zweiten Umfangswinkel, wobei die Umfangswinkel größer als 180°, bevorzugt zwischen 200° und 270°, weiter bevorzugt zwischen 210° und 270°, weiter bevorzugt zwischen 220° und 270°, weiter bevorzugt zwischen 230° und 270°, weiter bevorzugt zwischen 240° und 270°, weiter bevorzugt zwischen 250° und 270°, weiter bevorzugt zwischen 260° und 270°, sind.

Die Umfangswinkel können sich in ihrer Größe unterscheiden oder gleich groß sein. Der jeweilige Umfangswinkel einer Wellschlauchschale ergänzt sich mit einem Öffnungswinkel einer umfänglichen Öffnung der jeweiligen Wellschlauchschale zu 360°. Die Öffnungswinkel sind jeweils als ein Winkel zwischen einer äußersten Kante der ersten Endabschnitte der Wellschlauchschalen und einer äußersten Kante der zweiten Endabschnitte der Wellschlauchschalen beziehungsweise der Lippenabschnitte der Wellschlauchschalen definiert. Die Öffnungswinkel können gleich groß sein. Die Öffnungswinkel können sich in ihrer Größe auch geringfügig unterscheiden. Beispielsweise weisen die Öffnungswinkel jeweils einen Wert zwischen 95° und 110° auf. Jede Wellschlauchschale bildet im Querschnitt bevorzugt einen Zweidrittelkreis aus. Das heißt, sie umfasst dann jeweils einen Umfangswinkel von 240°. Der Öffnungswinkel beträgt dann dementsprechend 120°. Bevorzugt überdecken sich die erste Wellschlauchschale und die zweite Wellschlauchschale in dem zusammengeklappten Zustand mit einem Überdeckungswinkel. Der Überdeckungswinkel beträgt beispielsweise 40° bis 190°, bevorzugt 50° bis 180°, weiter bevorzugt 60° bis 170°. Insbesondere kann der Überdeckungswinkel auch kleiner als 150°, beispielsweise 70°, 80°, 90°, 100°, 110°, 120°, 130° oder 140° sein. Der Überdeckungswinkel kann 70° ± 10°, 80 ± 10°, 90° ± 10°, 100° ± 10°, 110 ± 10°, 120° ± 10°, 130° ± 10° oder 140° ± 10° sein. Der Überdeckungswinkel kann allerdings auch größer als 150°, beispielsweise 155°, 160°, 165°, 170°, 175° oder 180° sein. Der Überdeckungswinkel kann beispielsweise 155° ± 10°, 160° ± 10°, 165° ± 10°, 170° ± 10°, 175° ± 10° oder 180° ± 10° sein. In einer besonders bevorzugten Ausführungsform des Wellschlauchs 2 ist der Überdeckungswinkel größer gleich 160°, beispielsweise 160° bis 170°.

Gemäß einer weiteren Ausführungsform umfasst die erste Wellschlauchschale eine erste Öffnung, die kleiner als ein Innendurchmesser der ersten Wellschlauchschale ist, und die zweite Wellschlauchschale umfasst eine zweite Öffnung, die kleiner als ein Innendurchmesser der zweiten Wellschlauchschale ist.

Die Öffnungen können gleich groß oder unterschiedlich groß sein. Die Öffnungen sind jeweils definiert als ein Abstand zwischen der äußersten Kante der ersten Endabschnitte der Wellschlauchschalen und der äußersten Kante der zweiten Endabschnitte der Wellschlauchschalen beziehungsweise der Lippenabschnitte der Wellschlauchschalen. Bei dem Verbringen des Wellschlauchs von dem aufgeklappten Zustand in den zusammengeklappten Zustand wird die zweite Öffnung aufgeweitet und/oder die erste Öffnung komprimiert. Dabei wird die erste Wellschlauchschale durch die zweite Öffnung hindurchgedrückt, um diese innerhalb der zweiten Wellschlauchschale anzuordnen.

Gemäß einer weiteren Ausführungsform ist der Innendurchmesser der ersten Wellschlauchschale kleiner als der Innendurchmesser der zweiten Wellschlauchschale.

Hierdurch wird insbesondere erreicht, dass die erste Wellschlauchschale und/oder die zweite Wellschlauchschale in dem zusammengeklappten Zustand des Wellschlauchs vorspannungsfrei oder zumindest nur gering vorgespannt sind. Dadurch wird bei dem Zusammenklappen des Wellschlauchs und/oder in dem zusammengeklappten Zustand eine übermäßige mechanische Belastung der Wellschlauchschalen verhindert. Hierdurch sind diese besonders langlebig und vor Beschädigungen geschützt.

Gemäß einer weiteren Ausführungsform umfasst die erste Wellschlauchschale eine erste Symmetrieachse und die zweite Wellschlauchschale umfasst eine zweite Symmetrieachse, wobei die Symmetrieachsen in dem zusammengeklappten Zustand koaxial zueinander angeordnet sind.

Die erste Wellschlauchschale ist bevorzugt rotationssymmetrisch um die erste Symmetrieachse aufgebaut, wobei seitlich die erste Öffnung vorgesehen ist. Die zweite Wellschlauchschale ist bevorzugt rotationssymmetrisch um die zweite Symmetrieachse aufgebaut, wobei seitlich die zweite Öffnung vorgesehen ist. Unter "koaxial" ist vorliegend auch zu verstehen, dass die Symmetrieachsen bis zu 2 mm voneinander entfernt angeordnet sind.

Gemäß einer weiteren Ausführungsform umfasst der Gelenkabschnitt zwei mit den Wellschlauchschalen verbundene Verbindungsabschnitte und einen zwischen den Verbindungsabschnitten angeordneten Verformungsabschnitt, der im Querschnitt bogenförmig gewölbt ist und der sich in Richtung eines Innenraums des Wellschlauchs hin wölbt.

Bevorzugt sind die Verbindungsabschnitte stoffschlüssig mit den Wellschlauchschalen und der Verformungsabschnitt ist stoffschlüssig mit den Verbindungsabschnitten verbunden. Der Gelenkabschnitt ist somit als sich in der Längsrichtung erstreckendes welliges Band ausgebildet. Bevorzugt wird bei einem Zusammenklappen des Wellschlauchs nur der Verformungsabschnitt reversibel verformt. Der Verformungsabschnitt ist somit als eine in der Längsrichtung verlaufende Rippe ausgebildet, die in den Innenraum des Wellschlauchs hineinragt.

Gemäß einer weiteren Ausführungsform umfasst der Gelenkabschnitt zwei mit den Wellschlauchschalen verbundene Verbindungsabschnitte und einen zwischen den Verbindungsabschnitten angeordneten Verformungsabschnitt, wobei der Verformungsabschnitt dünnwandiger als die Verbindungsabschnitte ist, und wobei sich der Verformungsabschnitt von einem Innenraum des Wellschlauchs weg erstreckt.

Insbesondere ist der Verformungsabschnitt außerhalb des Innenraums angeordnet. Der Gelenkabschnitt umfasst weiterhin bevorzugt einen in der Längsrichtung verlaufenden Schlitz. Zwischen einem Hinterschnitt des Gelenkabschnitts und dem Schlitz ist bevorzugt der Verformungsabschnitt vorgesehen. Der Schlitz ist insbesondere V-förmig und erstreckt sich ausgehend von dem Innenraum in den Gelenkabschnitt hinein. Der Schlitz ist in der Radialrichtung insbesondere durch einen gekrümmten Abschnitt verschlossen. Der gekrümmte Abschnitt verläuft rippenförmig in der Längsrichtung. Die Verbindungsabschnitte, der Verformungsabschnitt und der gekrümmte Abschnitt sind bevorzugt materialeinstückig gefertigt. Außenseitig, das heißt, dem Innenraum abgewandt, ist an dem Gelenkabschnitt bevorzugt noch eine in der Längsrichtung verlaufende Nut vorgesehen, die im Querschnitt bogenförmig gekrümmt sein kann.

Gemäß einer weiteren Ausführungsform ist an dem Verformungsabschnitt ein Hinterschnitt vorgesehen, der eine gezielte Verformung des Verformungsabschnitts ermöglicht.

Der Hinterschnitt ermöglicht eine besonders dünnwandige Gestaltung des Verformungsabschnitts, wodurch dieser besonders leicht verformt werden kann. Der Hinterschnitt verhindert ferner eine Materialanhäufung im Bereich des Gelenkabschnitts. Der Verformungsabschnitt ist hierdurch dünnwandiger als der Rest des Gelenkabschnitts. Bei der Fertigung des Wellschlauchs wird der Hinterschnitt bevorzugt zwangsentformt.

Gemäß einer weiteren Ausführungsform sind die Wellschlauchschalen und der Gelenkabschnitt aus einem ersten Kunststoffmaterial gefertigt und der zumindest eine Lippenabschnitt ist aus einem sich von dem ersten Kunststoffmaterial unterscheidenden zweiten Kunststoffmaterial gefertigt.

Die beiden Kunststoffmaterialien unterscheiden sich beispielsweise chemisch. Bevorzugt ist das zweite Kunststoffmaterial ein thermoplastisches Elastomer (TPE). Thermoplastische Elastomere sind Kunststoffe, die sich bei Raumtemperatur vergleichbar den klassischen Elastomeren verhalten, sich jedoch unter Wärmezufuhr plastisch verformen lassen und somit ein thermoplastisches Verhalten zeigen. Beispielsweise ist der zumindest eine Lippenabschnitt aus einem thermoplastischen Polyurethan (TPU) gefertigt. Beispielsweise sind die Wellschlauchschalen und der Gelenkabschnitt aus Polyamid (PA), Polyethylen (PE), Polypropylen (PP), Polytetrafluorethylen (PTFE) oder Polyvinylchlorid (PVC) gefertigt. Bevorzugt sind die Wellschlauchschalen und der Gelenkabschnitt aus einem teilkristallinen Thermoplast gefertigt.

Die erste Wellschlauchschale und die zweite Wellschlauchschale sind bei einem Verbringen des Wellschlauchs von dem aufgeklappten Zustand in den zusammengeklappten Zustand oder umgekehrt um eine Drehachse relativ zueinander verschwenkbar, wobei die erste Wellschlauchschale und die zweite Wellschlauchschale um einen Verschwenkwinkel relativ zueinander verschwenkbar sind.

Der Verschwenkwinkel beträgt vorzugsweise 75° ± 20°. Die Drehachse ist bevorzugt im Bereich des Gelenkabschnitts angeordnet und kann in dem Innenraum des Wellschlauchs, außerhalb des Innenraums oder direkt in dem Gelenkabschnitt positioniert sein. Bevorzugt liegt die Drehachse in einer äußeren Randfaser des Gelenkabschnitts. Der Verschwenkwinkel ist vorzugsweise definiert als ein Winkel zwischen zwei Verbindungslinien der Symmetrieachsen der Wellschlauchschalen und der Drehachse.

Ferner wird ein Kabelbaum mit zumindest einem Kabel und einem derartigen aufklappbaren Wellschlauch vorgeschlagen, in welchem das zumindest eine Kabel aufgenommen ist.

Die Kabel können auch als Leitungen bezeichnet werden. Die Anzahl der Kabel ist beliebig. Die Kabel können identische oder unterschiedliche Durchmesser und/oder Querschnitte aufweisen. Der Kabelbaum beziehungsweise der Wellschlauch findet bevorzugt im Bereich der Kraftfahrzeugtechnik Anwendung. Der Kabelbaum beziehungsweise der Wellschlauch kann allerdings auch in jedem anderen Bereich eingesetzt werden. Die Kabel können elektrische Kabel, beispielsweise einphasige Kabel, mehrphasige Kabel, Koaxialkabel oder dergleichen, oder Fluidleitungen, wie beispielsweise Benzin-, Diesel, Kerosin- Hydraulik- oder Pneumatikleitungen, sein. Zum Fertigen des Kabelbaums werden in den sich in dem aufgeklappten Zustand befindlichen Wellschlauch die Kabel eingelegt. Hierzu werden die Kabel vorzugsweise senkrecht zu der Längsrichtung seitlich durch die erste Öffnung in die erste Wellschlauchschale eingelegt. Anschließend wird der Wellschlauch von dem aufgeklappten Zustand durch ein Verschwenken der zweiten Wellschlauchschale um den Gelenkabschnitt in den zusammengeklappten Zustand verbracht. Hierzu werden insbesondere die erste Wellschlauchschale und/oder die zweite Wellschlauchschale federelastisch verformt und die erste Wellschlauchschale wird zumindest abschnittsweise innerhalb der zweiten Wellschlauchschale angeordnet, so dass die zweite Wellschlauchschale die erste Wellschlauchschale zumindest abschnittsweise umgreift.

Weitere mögliche Implementierungen des aufklappbaren Wellschlauchs und/oder des Kabelbaums umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform des aufklappbaren Wellschlauchs und/oder des Kabelbaums hinzufügen.

Weitere vorteilhafte Ausgestaltungen und Aspekte des aufklappbaren Wellschlauchs und/oder des Kabelbaums sind Gegenstand der Unteransprüche sowie der im Folgenden beschriebenen Ausführungsbeispiele des aufklappbaren Wellschlauchs und/oder des Kabelbaums. Im Weiteren werden der aufklappbare Wellschlauch und/oder der Kabelbaum anhand von bevorzugten Ausführungsformen unter Bezugnahme auf die beigelegten Figuren näher erläutert.
- Fig. 1: zeigt eine schematische perspektivische Ansicht einer Ausführungsform eines Kabelbaums;
- Fig. 2: zeigt eine schematische Seitenansicht des Kabelbaums gemäß Fig. 1;
- Fig. 3: zeigt eine schematische Schnittansicht des Kabelbaums gemäß Fig. 1;
- Fig. 4: zeigt eine schematische Schnittansicht einer Ausführungsform eines aufklappbaren Wellschlauchs für den Kabelbaum gemäß Fig. 1;
- Fig. 5: zeigt eine schematische Schnittansicht des aufklappbaren Wellschlauchs gemäß der Schnittlinie V-V der Fig. 4;
- Fig. 6: zeigt eine weitere schematische Schnittansicht des aufklappbaren Wellschlauchs gemäß Fig. 4;
- Fig. 7: zeigt die Detailansicht VII gemäß Fig. 4;
- Fig. 8: zeigt die Detailansicht VIII gemäß Fig. 4;
- Fig. 9: zeigt eine weitere schematische Schnittansicht des aufklappbaren Wellschlauchs gemäß der Schnittlinie IX-IX der Fig. 6;
- Fig. 10: zeigt die Detailansicht X gemäß Fig. 9;
- Fig. 11: zeigt eine schematische perspektivische Ansicht des aufklappbaren Wellschlauchs gemäß Fig. 4;
- Fig. 12: zeigt eine weitere schematische perspektivische Ansicht des aufklappbaren Wellschlauchs gemäß Fig. 4;
- Fig. 13: zeigt eine weitere schematische perspektivische Ansicht des aufklappbaren Wellschlauchs gemäß Fig. 4;
- Fig. 14: zeigt eine schematische perspektivische Ansicht einer weiteren Ausführungsform eines aufklappbaren Wellschlauchs für den Kabelbaum gemäß Fig. 1;
- Fig. 15: zeigt eine schematische Schnittansicht des aufklappbaren Wellschlauchs gemäß Fig. 14;
- Fig. 16: zeigt die Detailansicht XVI gemäß Fig. 15;
- Fig. 17: zeigt eine schematische perspektivische Ansicht einer weiteren Ausführungsform eines aufklappbaren Wellschlauchs für den Kabelbaum gemäß Fig. 1;
- Fig. 18: zeigt die Detailansicht XVIII gemäß Fig. 17.

In den Figuren sind gleiche oder funktionsgleiche Elemente mit denselben Bezugszeichen versehen worden, sofern nichts anderes angegeben ist.

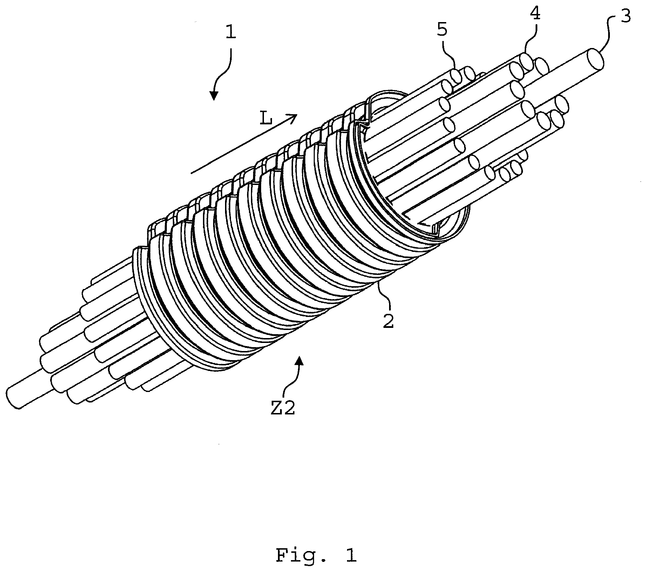

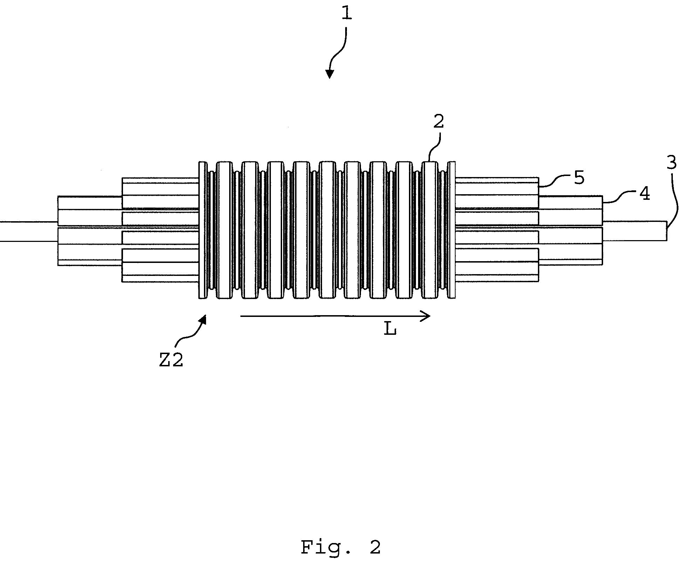

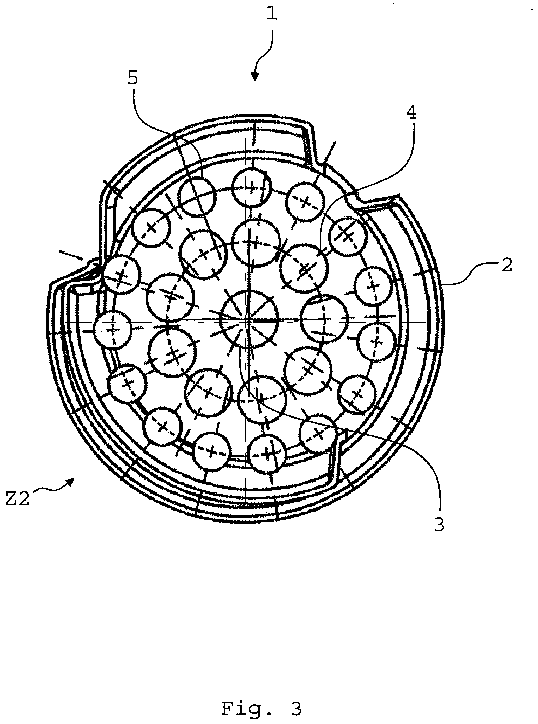

Die Fig. 1 zeigt eine schematische perspektivische Ansicht einer Ausführungsform eines Kabelbaums 1. Die Fig. 2 zeigt eine schematische Seitenansicht des Kabelbaums 1 und die Fig. 3 zeigt eine schematische Schnittansicht des Kabelbaums 1. Im Folgenden wird auf die Fig. 1 bis 3 gleichzeitig Bezug genommen.

Der Kabelbaum 1 umfasst einen klappbaren, zusammenklappbaren oder aufklappbaren Wellschlauch 2, der dazu eingerichtet ist, eine Vielzahl an Kabeln 3 bis 5 aufzunehmen, von denen in den Fig. 1 bis 3 nur einige mit einem Bezugszeichen versehen sind. Die Kabel 3 bis 5 können auch als Leitungen bezeichnet werden. Die Anzahl der Kabel 3 bis 5 ist beliebig. Die Kabel 3 bis 5 können identische oder unterschiedliche Durchmesser und/oder Querschnitte aufweisen. Die Kabel 3 bis 5 bilden zusammen mit dem Wellschlauch 2 den Kabelbaum 1. Der Kabelbaum 1 beziehungsweise der Wellschlauch 2 findet bevorzugt im Bereich der Kraftfahrzeugtechnik Anwendung. Der Kabelbaum 1 beziehungsweise der Wellschlauch 2 kann allerdings auch in jedem anderen Bereich eingesetzt werden.

Die Kabel 3 bis 5 können elektrische Kabel, beispielsweise einphasige Kabel, mehrphasige Kabel, Koaxialkabel oder dergleichen, oder Fluidleitungen, wie beispielsweise Benzin-, Diesel, Kerosin- Hydraulik- oder Pneumatikleitungen, sein. Der Wellschlauch 2 ist bevorzugt aus einem Kunststoffmaterial gefertigt. Der Wellschlauch 2 kann auch als Wellrohr bezeichnet werden oder ein Wellrohr sein.

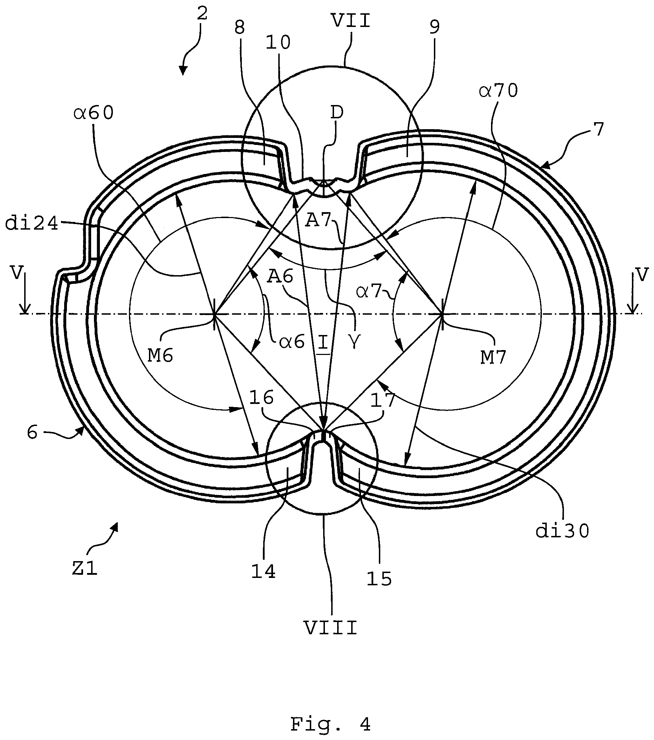

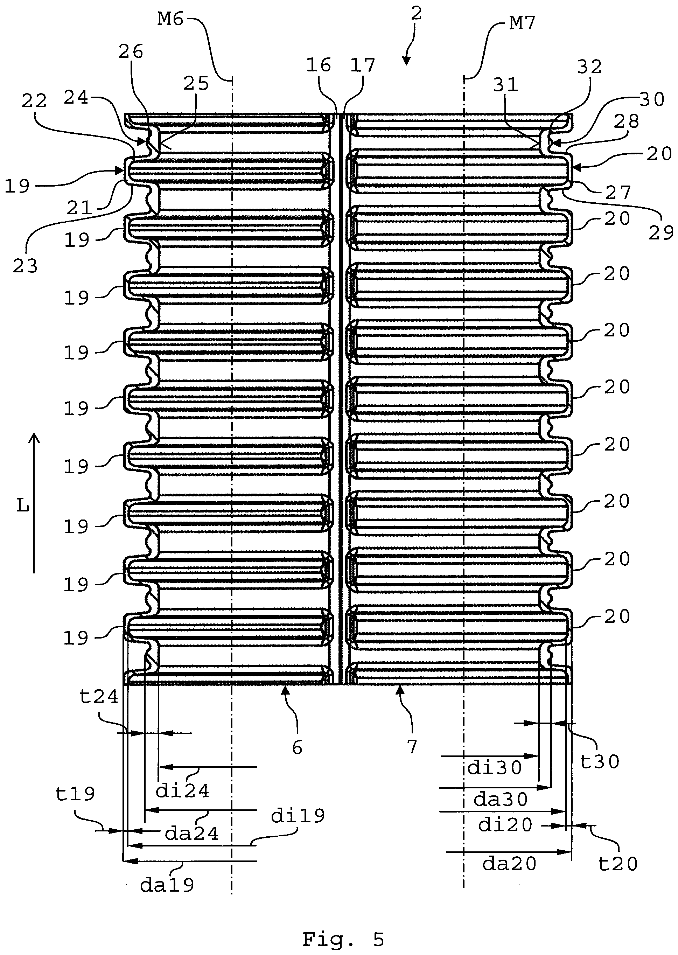

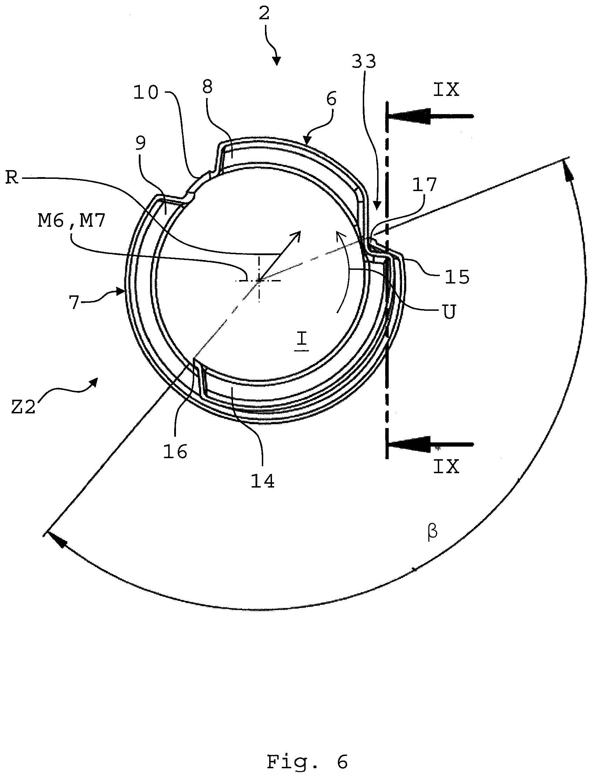

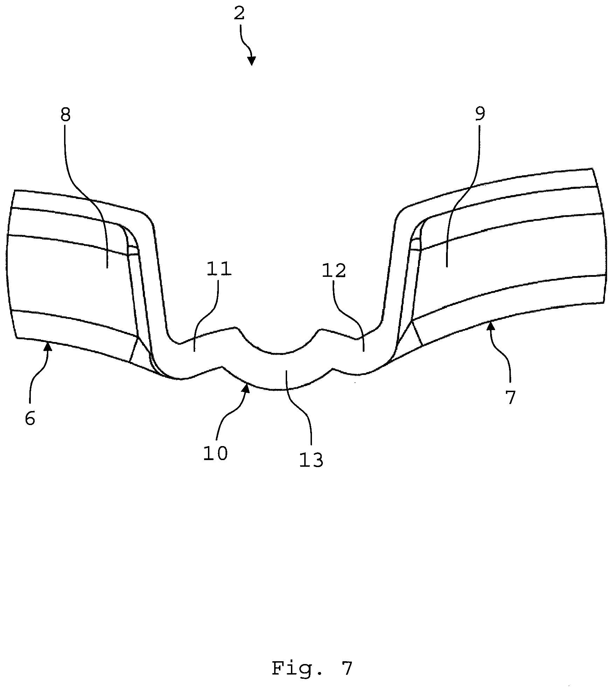

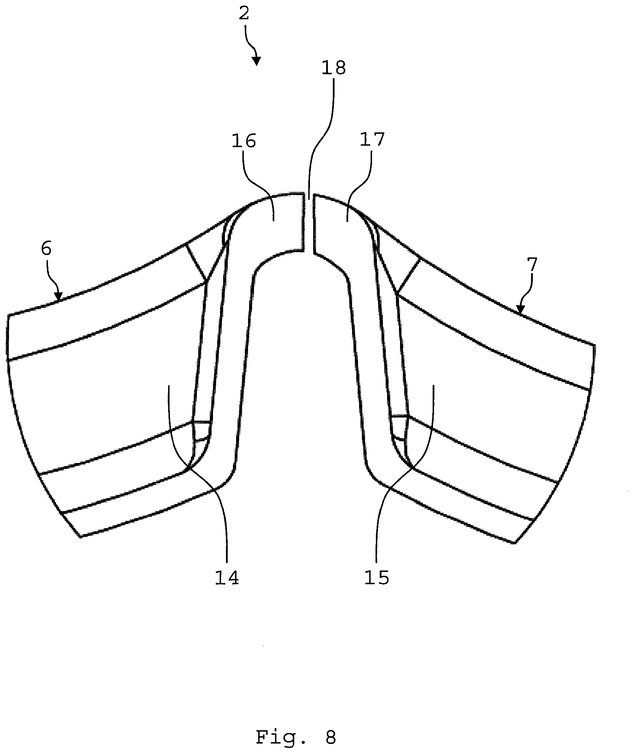

Der Wellschlauch 2 weist eine Längsrichtung L auf. Die Kabel 3 bis 5 verlaufen in der Längsrichtung L. Der Wellschlauch 2 ist von einem in der Fig. 4 gezeigten aufgeklappten Zustand Z1 in einen in den Fig. 1 bis 3 zusammengeklappten Zustand Z2 verbringbar. Der aufgeklappte Wellschlauch 2 ist in der Fig. 4 in einer schematischen Schnittansicht gezeigt. Die Fig. 5 zeigt eine schematische Schnittansicht des Wellschlauchs 2 gemäß der Schnittlinie V-V der Fig. 4. Die Fig. 6 zeigt eine schematische Schnittansicht des Wellschlauchs 2 in dem zusammengeklappten Zustand Z2. Die Fig. 7 und 8 zeigen die Detailansichten VII und VIII der Fig. 4. Im Folgenden wird auf die Fig. 4 bis 8 gleichzeitig Bezug genommen.

Der Wellschlauch 2 umfasst eine erste Wellschlauchschale 6 sowie eine zweite Wellschlauchschale 7. Die Wellschlauchschalen 6, 7 sind bogenförmig, insbesondere kreisbogenförmig, gekrümmt und können im Querschnitt jeweils beispielsweise die Form eines Zweidrittelkreises aufweisen. Die Wellschlauchschalen 6, 7 sind rohrförmig mit einer seitlichen Schlitzung. Die Wellschlauchschalen 6, 7 weisen jeweils eine Mittel- oder Symmetrieachse M6, M7 auf, zu der diese rotationssymmetrisch aufgebaut sind. Die Wellschlauchschalen 6, 7 können auch als Wellschlauchabschnitte bezeichnet werden.

Die erste Wellschlauchschale 6 und die zweite Wellschlauchschale 7 sind jeweils an einem ersten Endabschnitt 8 der ersten Wellschlauchschale 6 und einem ersten Endabschnitt 9 der zweiten Wellschlauchschale 7 mithilfe eines Gelenkabschnitts 10 verschwenkbar miteinander verbunden. Der Gelenkabschnitt 10 ist hierzu federelastisch verformbar. Insbesondere verformt sich der Gelenkabschnitt 10 bei einem Verbringen des Wellschlauchs 2 von dem aufgeklappten Zustand Z1 in den zusammengeklappten Zustand Z2 und umgekehrt.

Der Gelenkabschnitt 10 ist in einer Detailansicht auch in der Fig. 7 gezeigt. Der Gelenkabschnitt 10 ist vorzugsweise als Filmscharnier ausgebildet. Wie die Fig. 7 zeigt, weist der Gelenkabschnitt 10 einen mit dem ersten Endabschnitt 8 der ersten Wellschlauchschale 6 verbundenen Verbindungsabschnitt 11 sowie einen mit dem ersten Endabschnitt 9 der zweiten Wellschlauchschale 7 verbundenen zweiten Verbindungsabschnitt 12 auf. Die Verbindungsabschnitte 11, 12 verlaufen in der Längsrichtung L.

Zwischen den Verbindungsabschnitten 11, 12 ist ein Verformungsabschnitt 13 vorgesehen, der beim Verbringen des Wellschlauchs 2 von dem aufgeklappten Zustand Z1 in den zusammengeklappten Zustand Z2 oder umgekehrt federelastisch verformt wird. Der Verformungsabschnitt 13 ist vorzugsweise gekrümmt, insbesondere kreisbogenförmig gekrümmt. Der Verformungsabschnitt 13 ist somit als eine in der Längsrichtung L verlaufende Rippe ausgebildet, die in einen Innenraum I des Wellschlauchs 2 hineinragt. Der Gelenkabschnitt 10 ist stoffschlüssig mit der ersten Wellschlauchschale 6 und der zweiten Wellschlauchschale 7 verbunden. Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch Zerstörung der Verbindungsmittel und/oder der Verbindungspartner trennen lassen.

Insbesondere sind die Wellschlauchschalen 6, 7 und der Gelenkabschnitt 10 einteilig oder einstückig, insbesondere materialeinstückig, ausgebildet. Das heißt, der Gelenkabschnitt 10 ist vorzugsweise aus dem gleichen Material wie die Wellschlauchzahlen 6, 7 gefertigt. Beispielsweise sind die Wellschlauchschalen 6, 7 und der Gelenkabschnitt 10 aus Polyamid, Polyethylen, Polypropylen, Polytetrafluorethylen oder Polyvinylchlorid gefertigt. Der Wellschlauch 2 wird vorzugsweise mit Hilfe eines Extrusionsverfahrens hergestellt.

An einem dem jeweiligen ersten Endabschnitt 8, 9 gegenüberliegend angeordneten zweiten Endabschnitt 14, 15 der Wellschlauchschalen 6, 7 ist jeweils ein Lippenabschnitt 16, 17 vorgesehen. Insbesondere kann ein erster Lippenabschnitt 16 an einem zweiten Endabschnitt 14 der ersten Wellschlauchschale 6 und ein zweiter Lippenabschnitt 17 an einem zweiten Endabschnitt 15 der zweiten Wellschlauchschale 7 vorgesehen sein. Die Lippenabschnitte 16, 17 können somit an beiden zweiten Endabschnitten 14, 15 vorgesehen sein oder es kann alternativ an nur einem der beiden zweiten Endabschnitte 14, 15 ein derartiger Lippenabschnitt 16, 17 vorgesehen sein. Zwischen den Lippenabschnitten 16, 17 ist, wie in der Fig. 8 gezeigt, in dem aufgeklappten Zustand Z1 des Wellschlauchs 2 ein Spalt oder Schlitz 18 vorgesehen.

Die Lippenabschnitte 16, 17 sind glatt. Die Lippenabschnitte 16, 17 sind bevorzugt aus einem anderen Material als die Wellschlauchschalen 6, 7 gefertigt. Die Lippenabschnitte 16, 17 sind aus einem weicheren Material gefertigt als die Wellschlauchschalen 6, 7. Vorzugsweise sind die Lippenabschnitte 16, 17 an die Wellschlauchschalen 6, 7 anextrudiert. Dies kann in einem Koextrusionsverfahren, insbesondere in einem Zweikomponenten-Koextrusionsverfahren, erfolgen. Beispielsweise sind die Lippenabschnitte 16, 17 aus einem thermoplastischen Elastomer, wie einem thermoplastischen Polyurethan, gefertigt. Alternativ können die Lippenabschnitte 16, 17 oder einer der Lippenabschnitte 16, 17 aus dem gleichen Material wie die Wellschlauchschalen 6, 7 gefertigt sein.

Dadurch, dass die Lippenabschnitte 16, 17 bevorzugt aus einem weicheren Material gefertigt sind als die Wellschlauchschalen 6, 7, kann eine Beschädigung der Kabel 3 bis 5 beim Einbringen derselben in den aufgeklappten Wellschlauch 2 verhindert werden. Auch dadurch, dass die Lippenabschnitte 16, 17 glatt sind, wird eine Beschädigung der Kabel 3 bis 5 verhindert. In dem zusammengeklappten Zustand Z2 des Wellschlauchs 2 ist der erste Lippenabschnitt 16 der ersten Wellschlauchschale 6 in dem Innenraum I des Wellschlauchs 2 angeordnet. Aufgrund der Weichheit des Materials des ersten Lippenabschnitts 16 kann auch bei Schwingungen und Vibrationen, das heißt, im Betrieb des Kabelbaums 1, eine Beschädigung der Kabel 3 bis 5 durch einen Kontakt mit dem ersten Lippenabschnitt 16 ausgeschlossen werden. Dies erhöht die Betriebszuverlässigkeit und die Lebensdauer des Kabelbaums 1.

Die erste Wellschlauchschale 6 umfasst eine Vielzahl an ersten Wellen oder ersten Wellschlauchrippen 19, die zumindest abschnittsweise um die erste Wellschlauchschale 6 umlaufen. Analog hierzu umfasst die zweite Wellschlauchschale 7 eine Vielzahl an zweiten Wellen oder zweiten Wellschlauchrippen 20, die zumindest abschnittsweise um die zweite Wellschlauchschale 7 umlaufen. Die Wellschlauchrippen 19, 20 sind in der Längsrichtung L gleichmäßig voneinander beabstandet angeordnet. Der Gelenkabschnitt 10 ist frei von Wellschlauchrippen 19, 20. Das heißt, der Gelenkabschnitt 10 trennt die ersten Wellschlauchrippen 19 von den zweiten Wellschlauchrippen 20. Somit werden die Wellschlauchrippen 19, 20 von dem Gelenkabschnitt 10 unterbrochen. Da die Lippenabschnitte 16, 17 glatt sind, sind diese frei von Wellschlauchrippen 19, 20. Die Lippenabschnitte 16, 17 sind stirnseitig an den Wellschlauchrippen 19, 20 vorgesehen.

Jede erste Wellschlauchrippe 19 umfasst einen Rippenberg 21, der in der Längsrichtung L betrachtet eine zylinderförmige Wandung ausbildet, und zwei scheibenförmige Seitenwände 22, 23, zwischen denen der Rippenberg 21 angeordnet ist. Das heißt, die Seitenwände 22, 23 schließen den Rippenberg 21 seitlich ab und bilden somit eine erste Wellschlauchrippe 19. Zwischen zwei ersten Wellschlauchrippen 19 ist jeweils ein erstes Wellental oder erstes Rippental 24 vorgesehen. Umgekehrt ist zwischen zwei ersten Rippentälern 24 eine erste Wellschlauchrippe 19 angeordnet.

Jedes erste Rippental 24 umfasst eine dem Innenraum I zugewandte zylinderförmige Innenwand 25 und eine außenseitig an der ersten Wellschlauchschale 6 vorgesehene rippenförmige, umlaufende Vorwölbung 26. Die Vorwölbung 26 ist optional. Die Vorwölbung 26 dient als Materialansammlung und sorgt dafür, dass die Innenwand 25 in der Längsrichtung L gesehen flach oder eben ist. Hierdurch kann ein Scheuern der innenliegenden Kabel 3 bis 5 an der Innenwand 25 bei Vibrationen verhindert werden, da die Innenwand 25 keine Unebenheiten oder Einsenkungen aufweist, an denen die Kabel 3 bis 5 beschädigt werden könnten. Die Geometrie der ersten Rippentäler 24 mit der Vorwölbung 26 kann als "Ultra Flat Wave" (UFW) bezeichnet werden.

Die zweiten Wellschlauchrippen 20 weisen eine analog zu den ersten Wellschlauchrippen 19 ausgebildete Geometrie auf. Jede zweite Wellschlauchrippe 20 umfasst einen Rippenberg 27, der in der Längsrichtung L betrachtet zylinderförmig ist, und zwei scheibenförmige, beidseits des Rippenbergs 27 angeordnete Seitenwände 28, 29. Zwischen zwei zweiten Wellschlauchrippen 20 ist ein zweites Wellental oder zweites Rippental 30 vorgesehen. Insbesondere wechselt sich immer ein zweites Rippental 30 mit einer zweiten Wellschlauchrippe 20 ab. Jedes zweite Rippental 30 weist eine zylinderförmige Innenwand 31, die dem Innenraum I zugewandt ist, sowie eine außenseitig an dem jeweiligen zweiten Rippental 30 vorgesehene Vorwölbung 32 auf, die die gleiche Funktion aufweist wie die an der ersten Wellschlauchschale 6 vorgesehenen Vorwölbungen 26.

Die erste Wellschlauchschale 6 weist in den ersten Rippentälern 24 jeweils einen Innendurchmesser di24 und einen an der Vorwölbung 26 gemessenen Außendurchmesser da24 auf, wobei der Außendurchmesser da24 um eine Materialdicke t24 größer ist als der Innendurchmesser di24. Die erste Wellschlauchschale 6 weist ferner an den ersten Rippenbergen 21 der ersten Wellschlauchrippen 19 jeweils einen Innendurchmesser di19 und einen Außendurchmesser da19 auf, wobei der Außendurchmesser da19 um eine Materialdicke t19 größer als der Innendurchmesser di19 ist. Die Materialdicken t19, t24 können beispielsweise 0,1 bis 0,7 mm betragen. Vorzugsweise ist die Materialdicke t24 größer als die Materialdicke t19.

Analog hierzu weist die zweite Wellschlauchschale 7 in den zweiten Rippentälern 30 jeweils einen Innendurchmesser di30 und einen Außendurchmesser da30 auf, wobei der Außendurchmesser da30 um eine Materialdicke t30 größer als der Innendurchmesser di30 ist. Die Materialdicke t30 kann der Materialdicke t24 entsprechen. Die zweite Wellschlauchschale 7 weist ferner an den zweiten Wellenbergen 27 der zweiten Wellschlauchrippen 20 jeweils einen Innendurchmesser di20 und einen Außendurchmesser da20 auf, wobei der Außendurchmesser da20 um eine Materialdicke t20 größer als der Innendurchmesser di20 ist. Die Materialdicken t20, t30 können beispielsweise 0,1 bis 0,7 mm betragen. Vorzugsweise ist die Materialdicke t30 größer als die Materialdicke t20. Die Materialdicke t20 kann der Materialdicke t19 entsprechen.

Vorzugsweise sind die Durchmesser da24, di24, da19 beziehungsweise di19 der ersten Wellschlauchschale 6 jeweils kleiner als die korrespondierenden Durchmesser da30, di30, da20 beziehungsweise di20 der zweiten Wellschlauchschale 7. Insbesondere heißt das, dass der Außendurchmesser da19 der ersten Wellschlauchschale 6 kleiner ist als sein korrespondierender Außendurchmesser da20 der zweiten Wellschlauchschale 7. Beispielsweise kann der Außendurchmesser da19 der ersten Wellschlauchschale 6 um bevorzugt 0,2 bis 1,5mm kleiner als der Außendurchmesser da20 der zweiten Wellschlauchschale 7 sein. Gleiches gilt für die Durchmesser di19, da24 beziehungsweise di24 und ihre korrespondierenden Durchmesser di20, da30 beziehungsweise di30. Beispielsweise weist der Außendurchmesser da19 einen Wert von 20 mm und der Außendurchmesser da20 einen Wert von 21,2 mm auf.

Bei einem Verbringen des Wellschlauchs 2 von dem aufgeklappten Zustand Z1 in den zusammengeklappten Zustand Z2 wird die erste Wellschlauchschale 6 zumindest abschnittsweise in der zweiten Wellschlauchschale 7 aufgenommen, so dass die ersten Wellschlauchrippen 19 in den zweiten Wellschlauchrippen 20 zum Liegen kommen. Hierbei ist es vorteilhaft, dass der Außendurchmesser da19 dem Innendurchmesser di20 und der Außendurchmesser da24 dem Innendurchmesser di30 entspricht oder jeweils nur geringfügig größer oder kleiner als dieser ist. Hierdurch wird erreicht, dass die erste Wellschlauchschale 6 und/oder die zweite Wellschlauchschale 7 in dem zusammengeklappten Zustand Z2 des Wellschlauchs 2 vorspannungsfrei oder zumindest nur gering vorgespannt sind. Dadurch wird bei dem Zusammenklappen des Wellschlauchs 2 und/oder in dem zusammengeklappten Zustand Z2 eine übermäßige mechanische Belastung der Wellschlauchschalen 6, 7 verhindert. Hierdurch sind diese besonders langlebig und vor Beschädigungen geschützt.

Wie in der Fig. 4 gezeigt, umfasst die erste Wellschlauchschale 6 einen ersten Öffnungswinkel a6 und die zweite Wellschlauchschale 7 umfasst einen zweiten Öffnungswinkel α7. Der erste Öffnungswinkel a6 der ersten Wellschlauchschale 6 ist dabei bevorzugt gleich groß wie der zweite Öffnungswinkel α7 der zweiten Wellschlauchschale 7. Die Öffnungswinkel a6, a7 können sich in ihrer Größe auch geringfügig unterscheiden. Beispielsweise weisen die Öffnungswinkel a6, a7 jeweils einen Wert zwischen 95° und 110° auf. Die Öffnungswinkel a6, a7 sind jeweils als ein Winkel zwischen einer äußersten Kante der ersten Endabschnitte 8, 9 und einer äußersten Kante der zweiten Endabschnitte 14, 15 beziehungsweise der Lippenabschnitte 16, 17 der Wellschlauchschalen 6, 7 definiert.

Die erste Wellschlauchschale 6 weist ferner eine erste Öffnung A6 auf, die kleiner als der Innendurchmesser di24 ist. Die zweite Wellschlauchschale 7 weist eine zweite Öffnung A7 auf, die kleiner als der Innendurchmesser di30 ist. Da die Wellschlauchschalen 6, 7 bevorzugt unterschiedliche Durchmesser di24, di30, aber gleiche Öffnungswinkel a6, a7 aufweisen, ist die zweite Öffnung A7 zumindest geringfügig größer als die erste Öffnung A6. Die Öffnungen A6, A7 können allerdings auch gleich groß sein. Der erste Öffnungswinkel a6 ergänzt sich mit einem ersten Umfangswinkel a60 der ersten Wellschlauchschale 6 zu 360°. Der zweite Öffnungswinkel α7 ergänzt sich mit einem zweiten Umfangswinkel α70 der zweiten Wellschlauchschale 7 zu 360°. Die Umfangswinkel α60, a70 können gleich groß oder unterschiedlich groß sein. Beispielsweise können die Umfangswinkel α60, a70 einen Wert zwischen 250° und 265° einnehmen.

Bei dem Verbringen des Wellschlauchs 2 von dem in der Fig. 4 gezeigten aufgeklappten Zustand Z1 in den in der Fig. 6 gezeigten zusammengeklappten Zustand Z2 wird die erste Wellschlauchschale 6 zumindest teilweise in der zweiten Wellschlauchschale 7 aufgenommen. Bei dem Zusammenklappen des Wellschlauchs 2 wird die zweite Öffnung A7 aufgeweitet und die erste Öffnung A6 gestaucht. Hierbei verformen sich die erste Wellschlauchschale 6 und/oder die zweite Wellschlauchschale 7 federelastisch.

Wie die Fig. 6 weiterhin zeigt, überdecken sich die erste Wellschlauchschale 6 und die zweite Wellschlauchschale 7 mit einem Überdeckungswinkel β, der als Winkel zwischen äußersten Kanten der Lippenabschnitte 16, 17 definiert ist. Der Überdeckungswinkel β beträgt beispielsweise 40° bis 190°, bevorzugt 50° bis 180°, weiter bevorzugt 60° bis 170°. Insbesondere kann der Überdeckungswinkel β auch kleiner als 150°, beispielsweise 70°, 80°, 90°, 100°, 110°, 120°, 130° oder 140° sein. Der Überdeckungswinkel β kann 70° ± 10°, 80 ± 10°, 90° ± 10°, 100° ± 10°, 110 ± 10°, 120° ± 10°, 130° ± 10° oder 140° ± 10° sein. Der Überdeckungswinkel β kann allerdings auch größer als 150°, beispielsweise 155°, 160°, 165°, 170°, 175° oder 180° sein. Der Überdeckungswinkel β kann beispielsweise 155° ± 10°, 160° ± 10°, 165° ± 10°, 170° ± 10°, 175° ± 10° oder 180° ± 10° sein. In einer besonders bevorzugten Ausführungsform des Wellschlauchs 2 ist der Überdeckungswinkel β größer gleich 160°, beispielsweise 160° bis 170°.

Die Fig. 6 zeigt außerdem, dass der Wellschlauch 2 in dem zusammengeklappten Zustand Z2 eine Radialrichtung R aufweist, die von den Symmetrieachsen M6, M7 der Wellschlauchschalen 6, 7, die in dem zusammengeklappten Zustand Z2 bevorzugt koaxial zueinander positioniert sind, in Richtung der Wellschlauchschalen 6, 7 orientiert ist. Weiterhin umfasst der Wellschlauch 2 in dem zusammengeklappten Zustand Z2 eine Umfangsrichtung U, die im Uhrzeigersinn oder entgegen dem Uhrzeigersinn orientiert sein kann. Die Umfangsrichtung U ist bevorzugt parallel zu den gekrümmten Wellschlauchschalen 6, 7 orientiert. Die erste Wellschlauchschale 6 weist weiterhin eine nutförmige Ausnehmung 33 auf, die die ersten Wellschlauchrippen 19 in der Längsrichtung L teilweise durchbricht. In diese Ausnehmung 33 greifen in dem zusammengeklappten Zustand Z2 die zweiten Wellschlauchrippen 20 ein. Die Ausnehmung 33 durchbricht die ersten Wellschlauchrippen 19 in der Radialrichtung R bevorzugt nicht bis auf die Tiefe der Rippentäler 24.

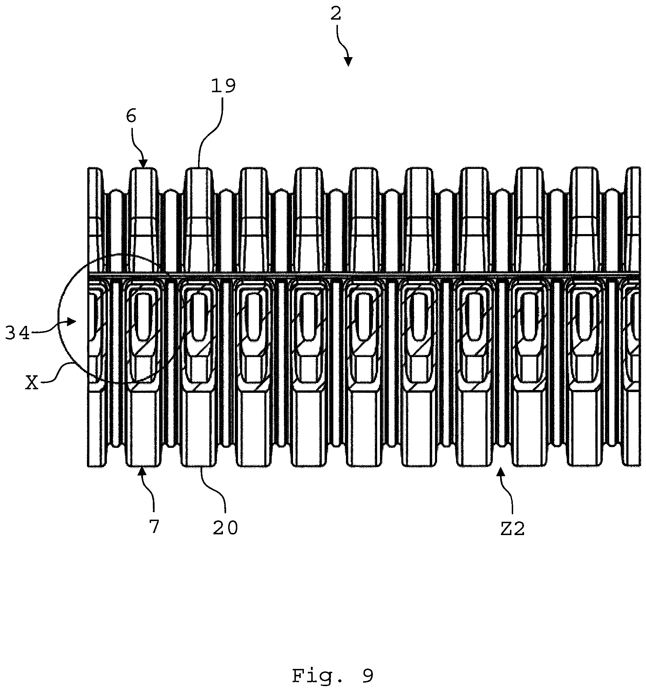

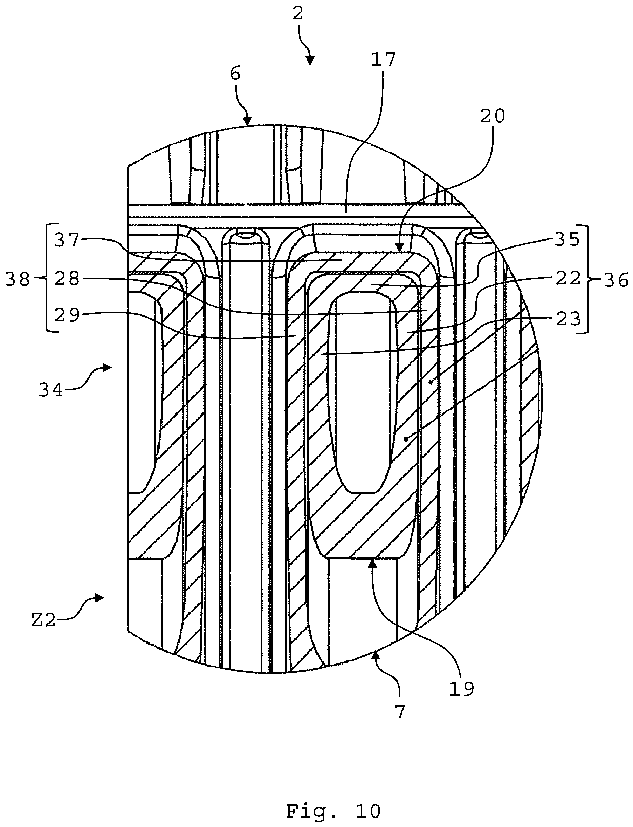

Die Fig. 9 zeigt eine Schnittansicht des Wellschlauchs 2 gemäß der Schnittlinie IX-IX der Fig. 6 und die Fig. 10 zeigt die Detailansicht X gemäß der Fig. 9. Wie in den Fig. 9 und 10 gezeigt ist, umfasst der Wellschlauch 2 ferner eine Verrasteinrichtung 34 zum miteinander Verrasten der beiden Wellschlauchschalen 6, 7 bei dem Verbringen des Wellschlauchs 2 von dem aufgeklappten Zustand Z1 in den zusammengeklappten Zustand Z2. Die Verrasteinrichtung 34 umfasst die ersten Wellschlauchrippen 19 und die zweiten Wellschlauchrippen 20 sowie die Ausnehmung 33. Mit Hilfe der Verrasteinrichtung 34 können die Wellschlauchschalen 6, 7 in dem zusammengeklappten Zustand Z2 formschlüssig miteinander verbunden werden, so dass sich der Wellschlauch 2 nicht ungewollt öffnen kann. Durch das Ineinander- oder Hintergreifen der ersten Wellschlauchschale 6 und der zweiten Wellschlauchschale 7 entsteht eine formschlüssige Verbindung zwischen diesen.

In dem zusammengeklappten Zustand Z2 des Wellschlauchs greifen die zweiten Wellschlauchrippen 20 insbesondere sowohl in der Radialrichtung R als auch in der Umfangsrichtung U des Wellschlauchs 2 formschlüssig in die ersten Wellschlauchrippen 19 ein. In der Radialrichtung R greifen die zweiten Wellschlauchrippen 20 derart formschlüssig in die ersten Wellschlauchrippen 19 ein, dass die ersten Wellschlauchrippen 19 innerhalb der zweiten Wellschlauchrippen 20 angeordnet sind. Dabei sind die Seitenwände 22, 23 der ersten Wellschlauchrippen 19 zwischen den Seitenwänden 28, 29 der zweiten Wellschlauchrippen 20 angeordnet. Bei dem Verbringen des Wellschlauchs 2 von dem aufgeklappten Zustand Z1 in den zusammengeklappten Zustand Z2 werden die Seitenwände 22, 23 und/oder die Seitenwände 28, 29 in der Längsrichtung L aufgeweitet oder zusammengedrückt und dabei federelastisch verformt.

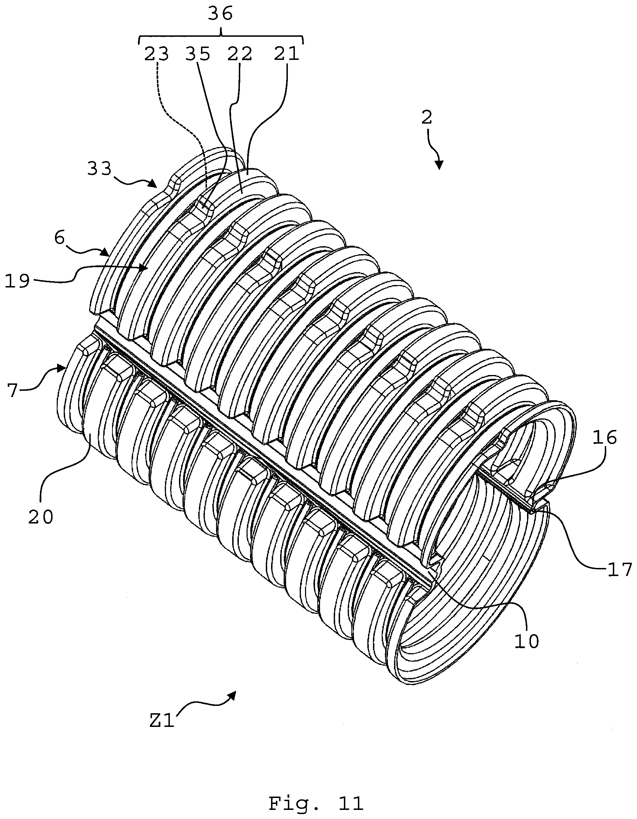

Jede erste Wellschlauchrippe 19 weist, wie in den Fig. 10 und 11 gezeigt, eine der Ausnehmung 33 zugewandte Vorderwand 35 auf. Die Vorderwand 35 bildet mit den Seitenwänden 22, 23 und dem Rippenberg 21 der jeweiligen ersten Wellschlauchrippe 19 einen ersten taschenförmigen Abschnitt oder ersten Taschenabschnitt 36 der jeweiligen ersten Wellschlauchrippe 19. Der erste Taschenabschnitt 36 kann auch als Aufnahmegeometrie oder Aufnahmetasche bezeichnet werden.

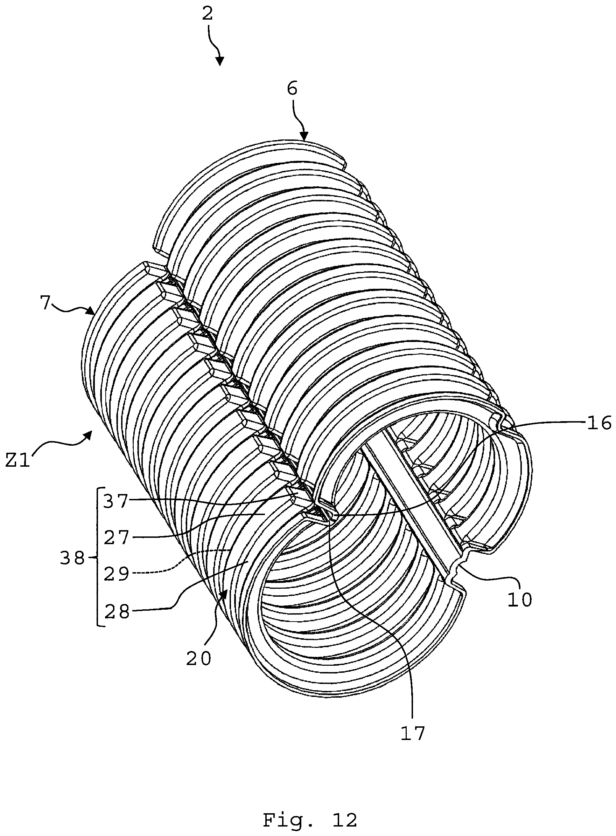

Analog weist, wie in den Fig. 10 und 12 gezeigt, auch jede zweite Wellschlauchrippe 20 eine Vorderwand 37 auf, die mit den Seitenwänden 28, 29 und dem jeweiligen Rippenberg 27 einen zweiten taschenförmigen Abschnitt oder zweiten Taschenabschnitt 38 bildet. In dem zusammengeklappten Zustand Z2 des Wellschlauchs 2 liegen die Vorderwände 35 der ersten Wellschlauchrippen 19 an den Vorderwänden 37 der zweiten Wellschlauchrippen 20 an. Mithilfe der Vorderwände 35, 37 kann die formschlüssige Verbindung zwischen den ersten Wellschlauchrippen 19 und den zweiten Wellschlauchrippen 20 in der Umfangsrichtung U verwirklicht werden. Das heißt, die Taschenabschnitte 36, 38 verhindern mit ihren Vorderwänden 35, 37, dass sich die Wellschlauchschalen 6, 7 in der Radialrichtung R zueinander verschieben.

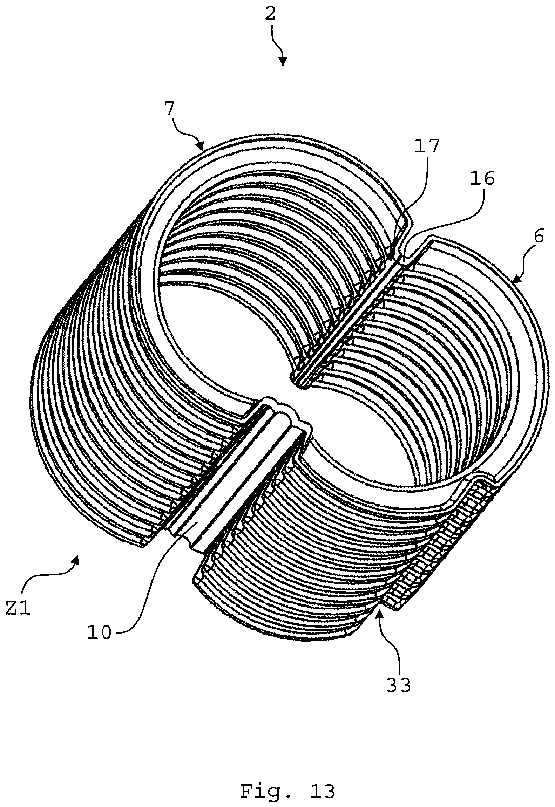

Die Funktionalität des Wellschlauchs 2 wird nachfolgend mit Bezug auf die Fig. 1 bis 13 erläutert, wobei die Fig. 13 nochmals eine schematische perspektivische Ansicht des Wellschlauchs 2 zeigt. In den sich in dem aufgeklappten Zustand Z1 befindlichen Wellschlauch 2 werden die Kabel 3 bis 5 eingelegt. Hierzu werden die Kabel 3 bis 5 vorzugsweise senkrecht zu der Längsrichtung L seitlich durch die erste Öffnung A6 in die erste Wellschlauchschale 6 eingelegt.

Anschließend wird der Wellschlauch 2 von dem aufgeklappten Zustand Z1 durch ein Verschwenken der zweiten Wellschlauchschale 7 um den Gelenkabschnitt 10 in den zusammengeklappten Zustand Z2 verbracht. Hierzu wird die erste Wellschlauchschale 6 und/oder die zweite Wellschlauchschale 7 federelastisch verformt und die erste Wellschlauchschale 6 wird zumindest abschnittsweise innerhalb der zweiten Wellschlauchschale 7 angeordnet, so dass die zweite Wellschlauchschale 7 die erste Wellschlauchschale 6 zumindest abschnittsweise umgreift. In dem zusammengeklappten Zustand Z2 ragt der erste Lippenabschnitt 16 in den Innenraum I hinein. Dadurch, dass die Lippenabschnitte 16, 17 aus einem weichen Material gefertigt sind, wird eine Beschädigung der Kabel 3 bis 5, beispielsweise bei Vibrationen, verhindert.

Bei einem Verbringen des Wellschlauchs 2 von dem aufgeklappten Zustand Z1 in den zusammengeklappten Zustand Z2 oder umgekehrt sind die erste Wellschlauchschale 6 und die zweite Wellschlauchschale 7 um eine in der Fig. 4 gezeigte Drehachse D relativ zueinander verschwenkbar. Die Drehachse D ist parallel zu den Symmetrieachsen M6, M7 angeordnet. Bei dem Verschwenken der Wellschlauchschalen 6, 7 werden die erste Wellschlauchschale 6 und die zweite Wellschlauchschale 7 um einen Verschwenkwinkel γ relativ zueinander verschwenkt. Der Verschwenkwinkel γ beträgt vorzugsweise 75° ± 20°. Die Drehachse D ist im Bereich des Gelenkabschnitts 10 angeordnet und kann in dem Innenraum I des Wellschlauchs 2, außerhalb des Innenraums I oder direkt in dem Gelenkabschnitt 10 positioniert sein. Bevorzugt liegt die Drehachse D in einer äußeren Randfaser des Gelenkabschnitts 10. Der Verschwenkwinkel γ ist vorzugsweise definiert als ein Winkel zwischen zwei Verbindungslinien der Symmetrieachsen M6, M7 der Wellschlauchschalen 6, 7 und der Drehachse D.

Mit Hilfe der Verrasteinrichtung 34 werden in dem zusammengeklappten Zustand Z2 die beiden Wellschlauchschalen 6, 7 miteinander verrastet. Hierbei greifen in dem zusammengeklappten Zustand Z2 die zweiten Wellschlauchrippen 20 sowohl in der Radialrichtung R als auch in der Umfangsrichtung U des Wellschlauchs 2 formschlüssig in die ersten Wellschlauchrippen 19 ein. Der formschlüssige Eingriff in der Radialrichtung R wird dadurch ermöglicht, dass in dem zusammengeklappten Zustand Z2 die Seitenwände 22, 23 der ersten Wellschlauchrippen 19 zwischen den Seitenwänden 28, 29 der zweiten Wellschlauchrippen 20 angeordnet sind, wobei die ersten Taschenabschnitte 36 der ersten Wellschlauchschale 6 in den zweiten Taschenabschnitten 38 der zweiten Wellschlauchschale 7 aufgenommen sind.

Der formschlüssige Eingriff in der Umfangsrichtung U wird dadurch ermöglicht, dass sowohl die ersten Taschenabschnitte 36 ersten Wellschlauchrippen 19 als auch die zweiten Taschenabschnitte 38 der zweiten Wellschlauchrippen 20 jeweils eine Vorderwand 35, 37 aufweisen. Zum Verriegeln in der Umfangsrichtung U liegt die Vorderwand 35 der ersten Taschenabschnitte 36 der ersten Wellschlauchrippen 19 jeweils innenseitig an der Vorderwand 37 der zweiten Taschenabschnitte 38 der zweiten Wellschlauchrippen 20 an. Mithilfe der Verrasteinrichtung 34 kann somit verhindert werden, dass sich der Wellschlauch 2 unerwünscht öffnet. Insbesondere kann mit Hilfe der Verrasteinrichtung 34 auch bei einer starken Biegung des Wellschlauchs 2 ein unerwünschtes Öffnen desselben verhindert werden. Dies erhöht die Betriebszuverlässigkeit.

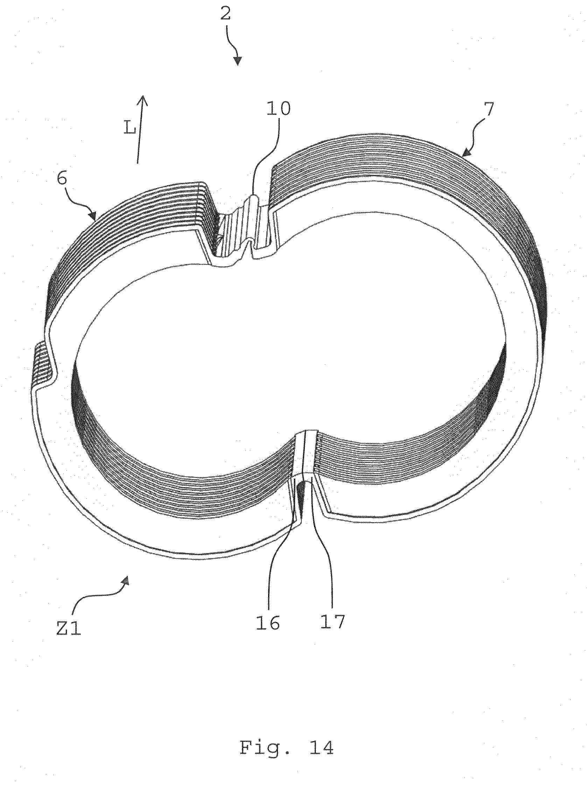

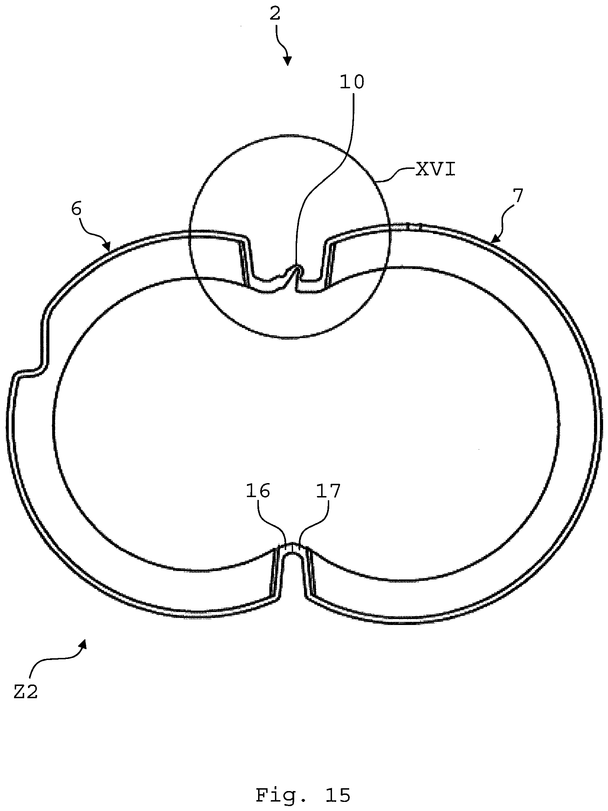

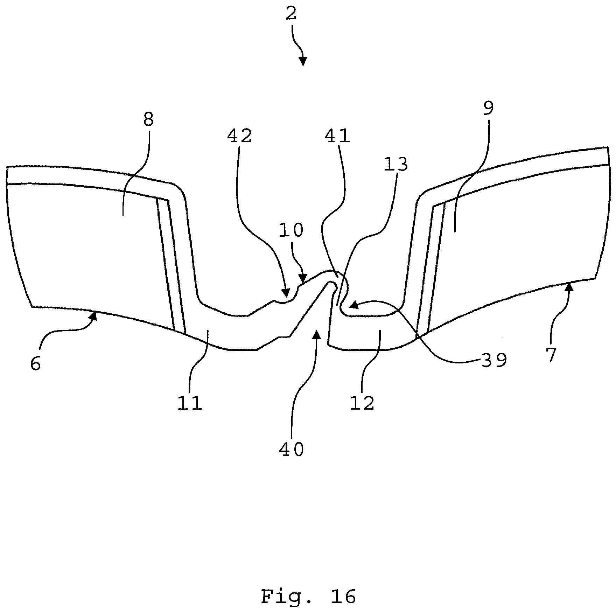

Die Fig. 14 bis 16 zeigen eine weitere Ausführungsform des Wellschlauchs 2. Hierbei zeigt die Fig. 14 eine schematische perspektivische Ansicht des Wellschlauchs 2, die Fig. 15 eine schematische Schnittansicht des Wellschlauchs 2 und die Fig. 16 die Detailansicht XVI gemäß der Fig. 15. Im Folgenden wird auf die Fig. 14 bis 16 gleichzeitig Bezug genommen.

Die Ausführungsform des Wellschlauchs 2 gemäß den Fig. 14 bis 16 unterscheidet sich von der Ausführungsform des Wellschlauchs 2 gemäß den Fig. 1 bis 13 lediglich durch eine alternative Ausgestaltung des Gelenkabschnitts 10. Die Funktionalität der beiden Ausführungsformen des Wellschlauchs 2 ist identisch. Der Gelenkabschnitt 10 umfasst zwei Verbindungsabschnitte 11, 12, zwischen denen ein Verformungsabschnitt 13 vorgesehen ist. Der Verformungsabschnitt 13 ist im Vergleich zum Rest des Gelenkabschnitts 10 sehr dünnwandig, so dass bei dem Verbringen des Wellschlauchs 2 von dem aufgeklappten Zustand Z1 in den zusammengeklappten Zustand Z2 nur der Verformungsabschnitt 13 elastisch verformt wird. An dem Verformungsabschnitt 13 ist ein Hinterschnitt 39 ausgebildet, der beim Fertigen des Wellschlauchs 2 zwangsentformt wird.

Der Gelenkabschnitt 10 umfasst weiterhin einen in der Längsrichtung L verlaufenden Schlitz 40. Zwischen dem Hinterschnitt 39 und dem Schlitz 40 ist der Verformungsabschnitt 13 vorgesehen. Der Schlitz 40 ist V-förmig und erstreckt sich ausgehend von dem Innenraum I in der Radialrichtung R in den Gelenkabschnitt 10 hinein. Der Schlitz 40 ist in der Radialrichtung R durch einen gekrümmten Abschnitt 41 verschlossen. Der Abschnitt 41 verläuft rippenförmig in der Längsrichtung L. Die Verbindungsabschnitte 11, 12, der Verformungsabschnitt 13 und der Abschnitt 41 sind materialeinstückig gefertigt. Außenseitig, das heißt, dem Innenraum I abgewandt, ist an dem Gelenkabschnitt 10 noch eine in der Längsrichtung L verlaufende Nut 42 vorgesehen.

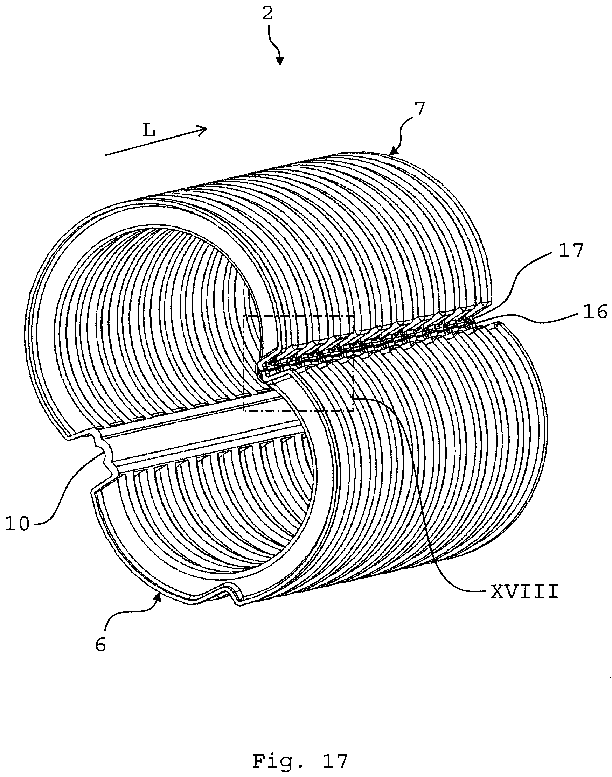

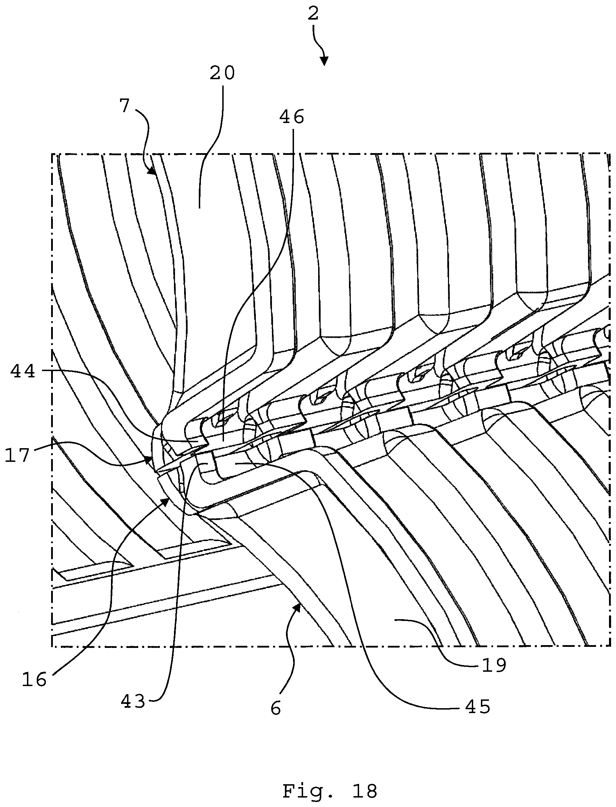

Die Fig. 17 und 18 zeigen eine weitere Ausführungsform des Wellschlauchs 2. Hierbei zeigt die Fig. 17 eine schematische perspektivische Ansicht des Wellschlauchs 2 und die Fig. 18 zeigt die Detailansicht XVIII gemäß der Fig. 17. Im Folgenden wird auf die Fig. 17 und 18 gleichzeitig Bezug genommen.

Die Ausführungsform des Wellschlauchs 2 gemäß den Fig. 17 und 18 unterscheidet sich von der Ausführungsform des Wellschlauchs 2 gemäß den Fig. 1 bis 13 lediglich durch eine alternative Ausgestaltung der Lippenabschnitte 16, 17. Bei dem Wellschlauch 2 gemäß den Fig. 17 und 18 sind die Lippenabschnitte 16, 17 nicht glatt sondern gewellt. Der erste Lippenabschnitt 16 weist eine Vielzahl in der Längsrichtung L voneinander beabstandet angeordneter Rippen 43 auf, die sich bevorzugt stirnseitig aus den ersten Wellschlauchrippen 19 herauserstrecken. Der zweite Lippenabschnitt 17 weist dazu korrespondierende Rippen 44 auf, die sich stirnseitig aus den zweiten Wellschlauchrippen 20 herauserstrecken können. Zwischen den Rippen 43 des ersten Lippenabschnitts 16 sind Rippentäler 45 vorgesehen, so dass sich immer eine Rippe 43 mit einem Rippental 45 abwechselt. Zwischen den Rippen 44 des zweiten Lippenabschnitts 17 sind Rippentäler 46 angeordnet, so dass sich immer eine Rippe 44 mit einem Rippental 46 abwechselt. Der Wellschlauch 2 gemäß den Fig. 17 und 18 kann auch den in den Fig. 14 bis 16 gezeigten Gelenkabschnitt 10 umfassen.

Obwohl die vorliegende Erfindung anhand von Ausführungsbeispielen beschrieben wurde, ist sie vielfältig modifizierbar.

### BEZUGSZEICHENLISTE

- 1: Kabelbaum
- 2: Wellschlauch
- 3: Kabel
- 4: Kabel
- 5: Kabel
- 6: Wellschlauchschale
- 7: Wellschlauchschale
- 8: Endabschnitt
- 9: Endabschnitt
- 10: Gelenkabschnitt
- 11: Verbindungsabschnitt
- 12: Verbindungsabschnitt
- 13: Verformungsabschnitt
- 14: Endabschnitt
- 15: Endabschnitt
- 16: Lippenabschnitt
- 17: Lippenabschnitt
- 18: Schlitz
- 19: Wellschlauchrippe
- 20: Wellschlauchrippe
- 21: Rippenberg
- 22: Seitenwand
- 23: Seitenwand
- 24: Rippental
- 25: Innenwand
- 26: Vorwölbung
- 27: Rippenberg
- 28: Seitenwand
- 29: Seitenwand
- 30: Rippental
- 31: Innenwand
- 32: Vorwölbung
- 33: Ausnehmung
- 34: Verrasteinrichtung
- 35: Vorderwand
- 36: Taschenabschnitt
- 37: Vorderwand
- 38: Taschenabschnitt
- 39: Hinterschnitt
- 40: Schlitz
- 41: Abschnitt
- 42: Nut
- 43: Rippe
- 44: Rippe
- 45: Rippental
- 46: Rippental

- A6: Öffnung
- A7: Öffnung
- D: Drehachse
- da19: Außendurchmesser
- di19: Innendurchmesser
- da20: Außendurchmesser
- di20: Innendurchmesser
- da24: Außendurchmesser
- di24: Innendurchmesser
- da30: Außendurchmesser
- di30: Innendurchmesser
- I: Innenraum
- L: Längsrichtung
- M6: Symmetrieachse
- M7: Symmetrieachse
- R: Radialrichtung
- t19: Materialdicke
- t20: Materialdicke
- t24: Materialdicke
- t30: Materialdicke
- U: Umfangsrichtung
- Z1: Zustand
- Z2: Zustand
- a6: Öffnungswinkel
- α7: Öffnungswinkel
- α60: Umfangswinkel
- α70: Umfangswinkel
- β: Überdeckungswinkel
- γ: Verschwenkwinkel

## Patentansprüche

1. Aufklappbarer Wellschlauch (2) zum Aufnehmen von Kabeln (3 - 5), mit:
einer ersten Wellschlauchschale (6), die eine Vielzahl an um diese umlaufenden ersten Wellschlauchrippen (19) aufweist,
einer zweiten Wellschlauchschale (7), die eine Vielzahl an um diese umlaufenden zweiten Wellschlauchrippen (20) aufweist,
einem Gelenkabschnitt (10), der die Wellschlauchrippen (19, 20) der beiden Wellschlauchschalen (6, 7) voneinander trennt und mit dessen Hilfe die beiden Wellschlauchschalen (6, 7) jeweils an einem ersten Endabschnitt (8, 9) derselben verschwenkbar miteinander verbunden sind,
einer Verrasteinrichtung (34) zum miteinander Verrasten der beiden Wellschlauchschalen (6, 7) bei einem Verbringen des Wellschlauchs (2) von einem aufgeklappten Zustand (Z1), in dem die erste Wellschlauchschale (6) außerhalb der zweiten Wellschlauchschale (7) angeordnet ist, in einen zusammengeklappten Zustand (Z2) desselben, in dem die erste Wellschlauchschale (6) zumindest abschnittsweise innerhalb der zweiten Wellschlauchschale (7) angeordnet ist,
wobei die Verrasteinrichtung (34) die Wellschlauchrippen (19, 20) umfasst,
wobei in dem zusammengeklappten Zustand (Z2) des Wellschlauchs (2) die zweiten Wellschlauchrippen (20) sowohl in einer Radialrichtung (R) als auch in einer Umfangsrichtung (U) des Wellschlauchs (2) die ersten Wellschlauchrippen (19) formschlüssig umgreifen,
wobei die erste Wellschlauchschale (6) und die zweite Wellschlauchschale (7) bei einem Verbringen des Wellschlauchs (2) von dem aufgeklappten Zustand (Z1) in den zusammengeklappten Zustand (Z2) oder umgekehrt um eine Drehachse (D) relativ zueinander verschwenkbar sind,
wobei die erste Wellschlauchschale (6) und die zweite Wellschlauchschale (7) um einen Verschwenkwinkel (y) relativ zueinander verschwenkbar sind,
**dadurch gekennzeichnet, dass** der aufklappbare Wellschlauch (2) weiter zumindest einen Lippenabschnitt (16, 17) an einem zweiten Endabschnitt (14) der ersten Wellschlauchschale (6) und/oder an einem zweiten Endabschnitt (15) der zweiten Wellschlauchschale (7) aufweist, wobei der zumindest eine Lippenabschnitt (16, 17) aus einem anderen Material als die Wellschlauchschalen (6, 7) gefertigt ist, und dass
die Verrasteinrichtung (34) erste Taschenabschnitte (36), die an den ersten Wellschlauchrippen (19) angeformt sind, und zweite Taschenabschnitte (38), die an den zweiten Wellschlauchrippen (20) angeformt sind, umfasst,
wobei in dem zusammengeklappten Zustand (Z2) des Wellschlauchs (2) die ersten Taschenabschnitte (36) in den zweiten Taschenabschnitten (38) aufgenommen sind,
wobei jeder erste Taschenabschnitt (36) eine Vorderwand (35) und jeder zweite Taschenabschnitt (38) ebenfalls eine Vorderwand (37) umfasst, und
wobei in dem zusammengeklappten Zustand (Z2) des Wellschlauchs (2) die jeweilige Vorderwand (35) der ersten Taschenabschnitte (36) an der jeweiligen Vorderwand (37) der zweiten Taschenabschnitte (38) anliegt, so dass die Taschenabschnitte (36, 38) einander in der Umfangsrichtung (U) formschlüssig umgreifen.

2. Aufklappbarer Wellschlauch nach Anspruch 1, wobei jeder erste Taschenabschnitt (36) einen Rippenberg (21) und jeder zweite Taschenabschnitt (38) ebenfalls einen Rippenberg (27) umfasst, und wobei in dem zusammengeklappten Zustand (Z2) des Wellschlauchs (2) der jeweilige Rippenberg (21) der ersten Taschenabschnitte (36) an dem jeweiligen Rippenberg (27) der zweiten Taschenabschnitte (38) anliegt, so dass die Taschenabschnitte (36, 38) einander in der Radialrichtung (R) formschlüssig umgreifen.

3. Aufklappbarer Wellschlauch nach Anspruch 1 oder 2, wobei jeder erste Taschenabschnitt (36) zwei in einer Längsrichtung (L) des Wellschlauchs (2) voneinander beabstandet angeordnete Seitenwände (22, 23) und jeder zweite Taschenabschnitt (38) ebenfalls zwei in der Längsrichtung (L) voneinander beabstandet angeordnete Seitenwände (28, 29) umfasst, und wobei in dem zusammengeklappten Zustand (Z2) des Wellschlauchs (2) die jeweiligen Seitenwände (22, 23) der ersten Taschenabschnitte (36) zwischen den jeweiligen Seitenwänden (28, 29) der zweiten Taschenabschnitte (38) angeordnet sind, so dass die Taschenabschnitte (36, 38) einander in der Längsrichtung (L) formschlüssig umgreifen.

4. Aufklappbarer Wellschlauch nach einem der Ansprüche 1 - 3, wobei die Verrasteinrichtung (34) eine in einer Längsrichtung (L) des Wellschlauchs (2) verlaufende Ausnehmung (33) umfasst, die die ersten Wellschlauchrippen (19) durchbricht, und wobei die zweiten Taschenabschnitte (38) in dem zusammengeklappten Zustand (Z2) des Wellschlauchs (2) in die Ausnehmung (33) eingreifen.

5. Aufklappbarer Wellschlauch nach einem der Ansprüche 1 - 4, wobei die erste Wellschlauchschale (6) einen ersten Umfangswinkel (α60) und die zweite Wellschlauchschale (7) einen zweiten Umfangswinkel (α70) umfasst, und wobei die Umfangswinkel (α60, α70) größer als 180°, bevorzugt zwischen 200° und 270°, weiter bevorzugt zwischen 210° und 270°, weiter bevorzugt zwischen 220° und 270°, weiter bevorzugt zwischen 230° und 270°, weiter bevorzugt zwischen 240° und 270°, weiter bevorzugt zwischen 250° und 270°, weiter bevorzugt zwischen 260° und 270°, sind.

6. Aufklappbarer Wellschlauch nach einem der Ansprüche 1 - 5, wobei die erste Wellschlauchschale (6) eine erste Öffnung (A6), die kleiner als ein Innendurchmesser (di24) der ersten Wellschlauchschale (6) ist, und die zweite Wellschlauchschale eine zweite Öffnung (A7), die kleiner als ein Innendurchmesser (di30) der zweiten Wellschlauchschale (7) ist, umfasst.

7. Aufklappbarer Wellschlauch nach Anspruch 6, wobei der Innendurchmesser (di24) der ersten Wellschlauchschale (6) kleiner als der Innendurchmesser (di30) der zweiten Wellschlauchschale (7) ist.

8. Aufklappbarer Wellschlauch nach einem der Ansprüche 1 - 7, wobei bei die erste Wellschlauchschale (6) eine erste Symmetrieachse (M6) und die zweite Wellschlauchschale (7) eine zweite Symmetrieachse (M7) umfasst, und wobei die Symmetrieachsen (M6, M7) in dem zusammengeklappten Zustand (Z2) koaxial zueinander angeordnet sind.

9. Aufklappbarer Wellschlauch nach einem der Ansprüche 1 - 8, wobei der Gelenkabschnitt (10) zwei mit den Wellschlauchschalen (6, 7) verbundene Verbindungsabschnitte (11, 12) und einen zwischen den Verbindungsabschnitten (11, 12) angeordneten Verformungsabschnitt (13) umfasst, der im Querschnitt bogenförmig gewölbt ist und der sich in Richtung eines Innenraums (I) des Wellschlauchs (2) hin wölbt.

10. Aufklappbarer Wellschlauch nach einem der Ansprüche 1 - 9, wobei der Gelenkabschnitt (10) zwei mit den Wellschlauchschalen (6, 7) verbundene Verbindungsabschnitte (11, 12) und einen zwischen den Verbindungsabschnitten (11, 12) angeordneten Verformungsabschnitt (13) umfasst, wobei der Verformungsabschnitt (13) dünnwandiger als die Verbindungsabschnitte (11, 12) ist, und wobei sich der Verformungsabschnitt (13) von einem Innenraum (I) des Wellschlauchs (2) weg erstreckt.

11. Aufklappbarer Wellschlauch nach Anspruch 10, wobei an dem Verformungsabschnitt (13) ein Hinterschnitt (39) vorgesehen ist, der eine gezielte Verformung des Verformungsabschnitts (13) ermöglicht.

12. Kabelbaum (1) mit zumindest einem Kabel (3 - 5) und einem aufklappbaren Wellschlauch (2) nach einem der Ansprüche 1 - 11, in welchem das zumindest eine Kabel (3 - 5) aufgenommen ist.

## Claims

1. Corrugated tube (2) that can be folded open, for holding cables (3 - 5), comprising:
a first corrugated tube shell (6), which has a plurality of first corrugated tube ribs (19) extending peripherally around said first corrugated tube shell,
a second corrugated tube shell (7), which has a plurality of second corrugated tube ribs (20) extending peripherally around said second corrugated tube shell,
a joint section (10), which separates the corrugated tube ribs (19, 20) of the two corrugated tube shells (6, 7) from each other and by means of which the two corrugated tube shells (6, 7) are pivotably connected to each other at respective first end sections (8, 9) thereof, and
a locking device (34) for locking the two corrugated tube shells (6, 7) to each other when the corrugated tube (2) is brought from a folded-open state (Z1), in which the first corrugated tube shell (6) is arranged outside of the second corrugated tube shell (7), into a folded-together state (Z2) of the corrugated tube, in which the first corrugated tube shell (6) is arranged inside the second corrugated tube shell (7) at least in sections,
wherein the locking device (34) includes the corrugated tube ribs (19, 20),
wherein in the folded-together state (Z2) of the corrugated tube (2), the second corrugated tube ribs (20) extend around the first corrugated tube ribs (19) interlockingly both in a radial direction (R) and in a peripheral direction (U) of the corrugated tube (2)
wherein the first corrugated tube shell (6) and the second corrugated tube shell (7) are pivotable relatively to each other about an axis of rotation (D) when the corrugated tube (2) is brought from the folded-open state (Z1) into the folded-together state (Z2) or vice versa, and
wherein the first corrugated tube shell (6) and the second corrugated tube shell (7) are pivotable relatively to each other by a pivot angle (γ),
**characterized in that** the corrugated tube (2) further comprises at least one lip section (16, 17), which is provided on a second end section (14) of the first corrugated tube shell (6) and/or on a second end section (15) of the second corrugated tube shell (7), wherein the at least one lip section (16, 16) is made of a different material than the corrugated tube shells (6, 7), and **in that**
the locking device (34) comprises first pocket sections (36), which are formed on the first corrugated tube ribs (19), and second pocket sections (38), which are formed on the second corrugated tube ribs (20),
wherein the first pocket sections (36) are held in the second pocket sections (38) in the folded-together state (Z2) of the corrugated tube (2),
wherein each first pocket section (36) comprises a front wall (35) and each second pocket section (38) also comprises a front wall (37), and
wherein in the folded-together state (Z2) of the corrugated tube (2), the respective front wall (35) of the first pocket sections (36) abuts against the respective front wall (37) of the second pocket sections (38) so that the pocket sections (36, 38) interlockingly extend around each other in the peripheral direction (U).

2. Corrugated tube that can be folded open according to claim 1, wherein each first pocket section (36) comprises a rib crest (21) and each second pocket section (38) also comprises a rib crest (27), and wherein in the folded-together state (Z2) of the corrugated tube (2), the respective rib crest (21) of the first pocket sections (36) abuts against the respective rib crest (27) of the second pocket sections (38) so that the pocket sections (36, 38) interlockingly extend around each other in the radial direction (R).

3. Corrugated tube that can be folded open according to claim 1 or 2, wherein each first pocket section (36) comprises two side walls (22, 23) arranged at a distance from each other in a longitudinal direction (L) of the corrugated tube (2) and each second pocket section (38) also comprises two side walls (28, 29) arranged at a distance from each other in the longitudinal direction (L), and wherein in the folded-together state (Z2) of the corrugated tube (2), the respective side walls (22, 23) of the first pocket sections (36) are arranged between the respective side walls (28, 29) of the second pocket sections (38) so that the pocket sections (36, 38) interlockingly extend around each other in the longitudinal direction (L).

4. Corrugated tube that can be folded open according to one of claims 1 - 3, wherein the locking device (34) comprises a recess (33), which extends in a longitudinal direction (L) of the corrugated tube (2) and which penetrates through the first corrugated tube ribs (19), and wherein the second pocket sections (38) engage in the recess (33) in the folded-together state (Z2) of the corrugated tube (2).

5. Corrugated tube that can be folded open according to one of claims 1 - 4, wherein the first corrugated tube shell (6) has a first peripheral angle (α60) and the second corrugated tube shell (7) has a second peripheral angle (a70), and wherein the peripheral angles (α60, α70) are larger than 180°, preferably between 200° and 270°, more preferably between 210° and 270°, more preferably between 220° and 270°, more preferably between 230° and 270°, more preferably between 240° and 270°, more preferably between 250° and 270°, more preferably between 260° and 270°.

6. Corrugated tube that can be folded open according to one of claims 1 - 5, wherein the first corrugated tube shell (6) comprises a first opening (A6), which is smaller than an inner diameter (di24) of the first corrugated tube shell (6), and the second corrugated tube shell comprises a second opening (A7), which is smaller than an inner diameter (di30) of the second corrugated tube shell (7).

7. Corrugated tube that can be folded open according to claim 6, wherein the inner diameter (di24) of the first corrugated tube shell (6) is smaller than the inner diameter (di30) of the second corrugated tube shell (7).

8. Corrugated tube that can be folded open according to one of claims 1 - 7, wherein the first corrugated tube shell (6) has a first axis of symmetry (M6) and the second corrugated tube shell (7) has a second axis of symmetry (M7), and wherein the axes of symmetry (M6, M7) are arranged coaxially to each other in the folded-together state (Z2).

9. Corrugated tube that can be folded open according to one of claims 1 - 8, wherein the joint section (10) comprises two connection sections (11, 12) connected to the corrugated tube shells (6, 7) and one deformation section (13), which is arranged between the connection sections (11, 12) and which is curved in the shape of an arc in cross-section and which curves toward an internal space (I) of the corrugated tube (2).

10. Corrugated tube that can be folded open according to one of claims 1 - 9, wherein the joint section (10) comprises two connection sections (11, 12) connected to the corrugated tube shells (6, 7) and one deformation section (13) arranged between the connection sections (11, 12), wherein the deformation section (13) has thinner walls than the deformation sections (11, 12), and wherein the deformation section (13) extends from an internal space (I) of the corrugated tube (2).

11. Corrugated tube that can be folded open according to claim 10, wherein an undercut (39) is provided on the deformation section (13) and allows a targeted deformation of the deformation section (13).

12. Wiring harness (1) with at least one cable (3 - 5) and a corrugated tube (2) that can be folded open according to one of claims 1 - 11, in which the at least one cable (3 - 5) is held.

## Revendications

1. Gaine annelée ouvrable (2) pour recevoir des câbles (3-5), comprenant :
une première coquille de gaine annelée (6) qui présente une pluralité de premières nervures de gaine annelées (19) s'étendant autour d'elle,
une deuxième coquille de gaine annelée (7) qui présente une pluralité de deuxièmes nervures de gaine annelée (20) s'étendant autour d'elle,
une section d'articulation (10) qui sépare les nervures de gaine annelée (19, 20) des deux coquilles de gaine annelée (6, 7) les unes des autres et à l'aide de laquelle les deux coquilles de gaine annelée (6, 7) sont reliées l'une à l'autre de manière pivotante au niveau d'une première section d'extrémité (8, 9),
un dispositif de verrouillage (34) pour verrouiller ensemble les deux coquilles de gaine annelée (6, 7) lorsque la gaine annelée (2) passe d'un état ouvert (Z1), dans lequel la première coquille de gaine annelée (6) est disposée à l'extérieur de la deuxième coquille de gaine annelée (7), à un état replié (Z2) de la gaine annelée,
dans lequel la première coquille de gaine annelée (6) est disposée au moins par sections à l'intérieur de la deuxième coquille de gaine annelée (7),
le dispositif de verrouillage (34) comprenant les nervures de gaine annelée (19, 20),
à l'état replié (Z2) de la gaine annelée (2), les deuxièmes nervures de gaine annelée (20) se positionnant autour des premières nervures de gaine annelée (19) de manière ajustée aussi bien dans une direction radiale (R) que dans une direction périphérique (U) de la gaine annelée (2),
la première coquille de gaine annelée (6) et la deuxième coquille de gaine annelée (7) étant pivotables l'une par rapport à l'autre autour d'un axe de rotation (D) lorsque la gaine annelée (2) passe de l'état ouvert (Z1) à l'état replié (Z2) ou vice-versa,
la première coquille de gaine annelée (6) et la deuxième coquille de gaine annelée (7) étant pivotables l'une par rapport à l'autre d'une angle de pivotement (y), **caractérisé en ce que** la gaine annelée ouvrable (2) présente en outre au moins une section formant lèvre (16, 17) sur une deuxième section d'extrémité (14) de la première coquille de gaine annelée (6) et/ou sur une deuxième section d'extrémité (15) de la deuxième coquille de gaine annelée (7), la ou les section(s) formant lèvres (16,17) étant constituée(s) d'un matériau différent de celui des coquilles de gaine annelée (6,7) et **en ce que**
le dispositif de verrouillage (34) comprend des premières sections formant poche (36) qui sont formées au niveau des premières nervures de gaine annelée (19) et des deuxièmes sections formant poche (38) qui sont formées au niveau des deuxièmes nervures de gaine annelée (20),
à l'état replié (Z2) de la gaine annelée (2), les premières sections formant poche (36) sont reçues dans les deuxièmes sections formant poche (38),
chaque première section formant poche (36) comprenant une paroi avant (35) et
chaque deuxième section formant poche (38) comprenant également une paroi avant (37), et
à l'état replié (Z2) de la gaine annelée (2), la paroi avant respective (35) des premières sections formant poche (36) est en contact avec la paroi avant respective (37) des deuxièmes sections formant poche (38), de sorte que les sections formant poche (36, 38) se positionnent de manière ajustée l'une sur l'autre dans la direction périphérique (U).

2. Gaine annelée ouvrable selon la revendication 1, dans laquelle chaque première section formant poche (36) présente un sommet de nervure (21) et chaque deuxième section formant poche (38) également un sommet de nervure (27), et dans laquelle, à l'état replié (Z2) de la gaine ondulée (2), le sommet de nervure (21) respectif des premières sections formant poche (36) est en contact avec le sommet de nervure (27) respectif des deuxièmes section formant poche (38), de sorte que les sections formant poches (36, 38) se positionnent l'une sur l'autre de manière ajustée dans la direction radiale (R).

3. Gaine annelée ouvrable selon la revendication 1 ou 2, dans laquelle chaque première section formant poche (36) comprend deux parois latérales (22, 23) disposées de manière espacée l'une de l'autre dans une direction longitudinale (L) de la gaine annelée (2) et chaque deuxième section formant poche (38) comprend également deux parois latérales (28, 29) disposées de manière espacée l'une de l'autre dans la direction longitudinale (L), et dans laquelle à l'état replié (Z2) de la gaine annelée (2) les parois latérales respectives (22, 23) des premières sections formant poches (36) sont disposées entre les parois latérales respectives (28, 29) des deuxièmes sections formant poches (38), de sorte que les sections formant poche (36, 38) se positionnent les unes sur les autres de manière ajustée dans la direction longitudinale (L).

4. Gaine annelée ouvrable selon l'une des revendications 1 à 3, dans laquelle le dispositif de verrouillage (34) présente un évidemment (33) s'étendant dans une direction longitudinale (L) de la gaine annelée (2) et qui interrompt les premières nervures de gaine annelée (19) et dans laquelle les deuxièmes sections formant poche (38) s'insèrent à l'état replié (Z2) de la gaine annelée (2) dans l'évidement (33).

5. Gaine annelée ouvrable selon l'une des revendications 1 à 4, dans laquelle la première coquille de gaine annelée (6) présente un premier angle périphérique (α60) et la deuxième coquille de gaine annelée (7) un deuxième angle périphérique (α70) et dans laquelle les angles périphériques (α60, α70) sont supérieurs à 180°, de préférence compris entre 200° et 270°, encore plus préférentiellement entre 210° et 270°, encore plus préférentiellement entre 220° et 270°, encore plus préférentiellement entre 230° et 270°, plus préférentiellement encore entre 240° et 270°, plus préférentiellement encore entre 250° et 270°, plus préférentiellement encore entre 260° et 270°.

6. Gaine annelée ouvrable selon l'une des revendications 1 à 5, dans laquelle la première coquille de gaine annelée (6) présente une première ouverture (A6), qui est inférieure à un diamètre interne (di24) de la première coquille de gaine annelée (6) et la deuxième coquille de gaine ondulée présente une deuxième ouverture (A7), qui est inférieure à un diamètre interne (di30) de la deuxième coquille de gaine ondulée (7).

7. Gaine ondulée ouvrable selon la revendication 6, dans laquelle le diamètre interne (di24) de la première coquille de gaine annelée (6) est inférieur au diamètre interne (di30) de la deuxième coquille de gaine annelée (7).

8. Gaine annelée ouvrable selon l'une des revendications 1 à 7, dans laquelle la première coquille de gaine annelée (6) présente une premier axe de symétrie (M6) et la deuxième coquille de gaine annelée (7) présente un deuxième axe de symétrie (M7) et dans laquelle les axes de symétrie (M6, M7) sont disposés à l'état replié (Z2) de manière coaxiale.

9. Gaine annelée ouvrable selon l'une des revendications 1 à 8, dans laquelle la section d'articulation (10) présente deux sections de liaison (11, 12) reliés aux coquilles de gaine annelée (6, 7) et une section de déformation (13) disposée entre les sections de liaison (11, 12), laquelle est incurvée en section transversale et s'enroule en direction d'un espace intérieur (I) de la gaine annelée (2).

10. Gaine annelée ouvrable selon l'une des revendications 1 à 9, dans laquelle la section d'articulation (10) présente deux sections de liaison (11, 12) reliées aux coquilles de gaine annelée (6, 7) et une section de déformation (13) disposée entre les sections de liaison (11, 12), la section de déformation (13) ayant une paroi plus mince que celle des sections de liaison (11, 12) et la section de déformation (13) s'étendant en s'éloignant d'un espace intérieur (I) de la gaine annelée (2).

11. Gaine annelée ouvrable selon la revendication 10, dans laquelle est prévue dans la section de déformation (13) une section arrière (39) qui permet une déformation ciblée de la section de déformation (13).

12. Faisceau de câbles (1) avec au moins un câble (3-5) et une gaine annelée ouvrable (2) selon l'une des revendications 1 à 11 dans laquelle le ou les câbles (3-5) sont logés.
